# EUROPÄISCHE PATENTSCHRIFT

(11) **EP 0 690 427 B1**
(45) Veröffentlichungstag und Bekanntmachung des Hinweises auf die Patenterteilung: **26.01.2000**
(21) Anmeldenummer: 95109141.2
(22) Anmeldetag: 13.06.1995
(51) Int. Cl.: G09F 3/02, G09F 3/10, G03B 7/24

(54) **Etikett mit integrierter Codierung**
Label with build-in coding
Etiquette à codage intégré

(30) Priorität: 29.06.1994 DE 9410522 U
(43) Veröffentlichungstag der Anmeldung: 03.01.1996
(60) Teilanmeldung: 99112606.1
(73) Patentinhaber: Steinbeis PPL GmbH, 83098 Brannenburg (DE)
(72) Erfinder: Schönfelder, Helmut, D-83626 Unterdarching, Valley (DE); Haag, Wilhelm, D-85521 Ottobrunn (DE); Wiedemann, Otto, D-82319 Starnberg (DE)
(74) Vertreter: Liska, Horst, Dr.-Ing.

(56) Entgegenhaltungen:
- EP-A- 0 143 755
- GB-A- 2 141 096
- GB-A- 2 240 081
- PATENT ABSTRACTS OF JAPAN vol. 014 no. 114 (P-1015) ,2.März 1990 & JP-A-01 312539 (KONICA CORP) 18.Dezember 1989,

## Beschreibung

Die Erfindung betrifft ein Haftetikett für einen zu etikettierenden Gegenstand, insbesondere für eine Filmpatrone (z.B. Kleinbildfilm) für Fotoapparate, wobei das Haftetikett durch die Lage wenigstens einer Grenze zwischen einer elektrisch leitfähigen Schicht und einer darüberliegenden, elektrisch nicht leitfähigen Schicht Eigenschaften des Gegenstands, insbesondere eines Films in der Filmpatrone, maschinell lesbar codiert. Die Codierung kann eine sog. CAS("Camera Auto Sensing")- Codierung sein, die Informationen über den enthaltenen fotografischen Film - Filmempfindlichkeit, Filmlänge und Belichtungsspielraum - enthält.

Die Codierung erfolgt durch definierte Anordnung elektrisch leitender und nichtleitender Felder bzw. deren gemeinsamer Grenzen an festgelegter Stelle auf der Filmpatrone, wobei die elektrisch leitenden Felder miteinander elektrisch leitfähig verbunden sind. Die Informationen werden durch ein elektrisch aktives System - bestehend aus zwei Reihen von Kontakten im Kameragehäuse - abgetastet. Dabei wird über je einen Kontakt pro Reihe Strom eingeleitet, und über die in der Reihe folgenden Kontakte kann dann je nach abgetastetem Feld (leitfähig oder nicht leitfähig) ein Stromfluß detektiert werden oder nicht. Die jeweilige Kombination der stromführenden Kontakte ergibt dann die entsprechende Information, die von der Camera verarbeitet wird.

Bisher sind die Patronenhülsen direktbedruckt. Die CAS-Codierung wird dabei durch die Leitfähigkeit des Hülsenmaterials erreicht, das an den Stellen, die nicht leitend sein sollen, durch elektrisch isolierende Druckfarben abgedeckt wird, so daß beim Einlegen der Patrone in den Fotoapparat über die Kontakte des CAS-Systems an diesen Stellen kein Strom fließen kann.

Bei einer Anzahl von Hausmarken werden die Patronenhülsen mit einer Kombination von Direktdruck und Haftetikett ausgestattet, wobei die CAS-Codierung bislang in keinem Fall im Etikett integriert werden konnte, sondern immer über den Direktdruck realisiert wurde.

Die Etikettierung erfolgt in diesen Fällen jeweils nach der Montage der Patronen, so daß das Etikett als solches erkennbar ist und hinsichtlich der Gestaltung deutliche Abstriche gemacht werden müssen. Es besteht bei diesem Verfahren außerdem die Gefahr, daß Etikett und Codierung unterschiedliche Filmtypen aufweisen und damit verhängnisvolle. Verwechslungen stattfinden können.

Die Patronen bestehen aus folgenden Komponenten: Patronenhülse, Wickelachse, Deckel, Boden und Dichtlippen aus Filz an der Filmaustrittsöffnung.

Die Patronenhülsen werden aus einem 0,3 mm dicken, verchromten Stahlblech geformt. Die Bedruckung der Bleche erfolgt im Offsetdruck oder einer Kombination von Offsetdruck mit Siebdruck , wobei im Bereich der CAS-Codierung in jedem Fall eine spezielle, hochkratzfeste, elektrisch nicht leitende Druckfarbe mehrfach (mindestens zweimal) übereinander gedruckt wird.

Die nicht leitende Druckfarbe, die festgelegte CAS-Felder isoliert, muß die in der Praxis auftretende Scheuerbeanspruchung durch die Kontakte unbeschadet überstehen, da sonst durch unbeabsichtigten Stromfluß Fehlinformationen ausgelesen werden und der Film falsch belichtet wird. Die hohe Farbschichtdicke des mehrmaligen Übereinanderdrucks einer speziellen hochkratzfesten Druckfarbe ist demnach im Bereich der CAS-Codierung durch die Notwendigkeit, eine hohe Scheuerfestigkeit zu erreichen, unabdingbar.

Als nächster Schritt werden am bedruckten Blech die für die Formung der Filmöffnung notwendigen Ausstanzungen durchgeführt und dann das Blech in für die Patronenmontagemaschine geeignete Streifen geschnitten. Die Streifen werden so dem Filmhersteller angeliefert. Alternativ erfolgt das Ausstanzen der Lippen für die Filmöffnung und der Zuschnitt in Streifen erst beim Filmhersteller.

Dort werden die vorgefertigten Blechstreifen vom Stapel in die Montagemaschine eingeführt und links und rechts die Dichtlippen von der Rolle zugeführt und verklebt (teilweise werden die Dichtlippen auch bereits vorher in einem separaten Arbeitsgang aufgebracht). Nach Abtrennen eines Einzelzuschnitts vom Streifen wird dieser zur Hülse gebogen und die Patrone durch Einfügen der Wickelachse und Aufbördeln von Boden- und Deckelteil komplettiert.

Die Beschickung der Patronen mit dem fotografischen Film erfolgt entweder in einem separaten Arbeitsgang nach Fertigstellung der Patrone oder in Verbindung mit dem Einfügen der Wickelachse.

Fotografische Filme werden in einer großen Anzahl an Sorten angeboten: Farbnegativfilme, Schwarz-Weiß-Filme, Diafilme, verschiedene Filmempfindlichkeiten, verschiedene Filmlängen, Sonderkonfektionierungen für Promotionzwecke, Hausmarken usw. Ein Sortiment von mehr als 100 Sorten, bis zu 250, ist daher für einen Filmhersteller normal.

Damit verbunden ist das logistische Problem, für die einzelnen Sorten die entsprechend bedruckten Blechstreifen zum geforderten Zeitpunkt und in der geforderten Menge verfügbar zu haben. Dies bedeutet, daß die gängigsten Sorten (normalerweise ca. 20) ständig in ausreichender Menge auf Lager gehalten werden und weniger gängige Sorten rechtzeitig bestellt werden müssen.

Da die Blechzuschnitte schwer und voluminös sind, wird so eine große Lagerkapazität beansprucht, die hohe Kosten verursacht. Wird andererseits die Lagerhaltung auf ein Minimum reduziert, leidet automatisch die Flexibilität darunter, da nicht vorrätige Sorten erst beschafft werden müssen.

Bei Verwendung eines Etiketts werden Blech und Druck voneinander getrennt, indem der Druck und die Ausbildung der Grenze vollständig auf ein Haftetikett aufgebracht wird. Die Lagerhaltung läßt sich an die Kapazität der Patronenmontage anpassen, d. h. auf ein Minimum zurückschrauben. Im Idealfall läßt sich die Lagerung des Patronenmaterials auf eine, nämlich unbedruckte Sorte reduzieren, weil die Sorten erst durch die Etikettierung festgelegt werden. Die Lagerung der Ausstattung für die einzelnen Sorten kann kompakt - und damit platz- und kostensparend - in Etikettenrollen erfolgen.

Da der Direktdruck entfällt, besteht keine Notwendigkeit mehr, in den dafür vorgegebenen, aufwendig zu handhabenden Formaten zu arbeiten, sondern das Blech kann als Endlosband direkt der Patronenfertigung zugeführt werden.

In weiteren Schritten ist auch der Ersatz der Blechpatronen durch vorgefertigte Kunststoffpatronen denkbar, da die Leitfähigkeit des Patronenmaterials nicht mehr zwingend genutzt werden muß.

Durch die Etikettierung der Filmpatronen besteht die Möglichkeit, die Scheuerfestigkeit neben dem üblichen Verfahren des Übereinanderdrucks von hochkratzfesten Spezialfarben auch durch eine Überlaminierung oder Kaschierung zu erreichen, oder durch partielles Aufbringen einer leitfähigen Schicht nur in den entsprechenden Bereichen, die leitfähig sein sollen, als funktionales Kriterium unerheblich zu machen.

Dadurch ist die Etikettierung verbunden mit einer enormen Erweiterung der möglichen Gestaltungsformen bis hin zum hochwertigen autotypischen Druck, wodurch sich das Etikett ansprechend und werbewirksam gestalten läßt, z.B. mehrfarbig, hochglänzend, mit Verlaufsdarstellung. Das Etikett kann darüber hinaus mit einem optisch abtastbaren Strichcode versehen sein.

Es wurde versucht, auf Filmpatronen vorhandene CAS-Codierungen mit einem eine andere Codierung tragenden Haftetikett zu überkleben, um die abgetastete Filmempfindlichkeit zu ändern. Diese Haftetiketten enthalten eine einzige ungeschützte, der Korrosion ausgesetzte Metallschicht, oder eine einzige, nichtmetallische Trägerschicht, die partiell mit empfindlicher und ungeschützter leitfähiger Farbe bedruckt ist. Solche Etiketten mögen zum gelegentlichen Ändern der Filmempfindlichkeit ausreichen, sind jedoch zur serienmäßigen Verwendung bei der Massenfertigung von Filmpatronen nicht zuverlässig genug.

Aus der EP 143 755 A2 ist ein gattungsgemäßes Etikett bekannt, dessen leitfähige Schicht aus ungeschützter Aluminiumfolie oder Aluminiumrohfolie besteht, die partiell isolierend bedruckt ist. Die Grenze des Aufdrucks definiert die Codierung. Der Aufdruck neigt zu Rissen beim Etikettieren und ist kratzempfindlich.

Die GB 2 240 081 zeigt ein ähnliches Haftetikett, bei dem ein leitendes metallisiertes Trägermaterial partiell isolierend bedruckt ist, oder dessen nicht leitfähiges Trägermaterial partiell leitend bedruckt wird.

Aus GB-A- 2 141 096 ist ein Haftetikett nach dem Oberbegriff der Ansprüche 1 und 6 bekannt.

Aufgabe der Erfindung ist es daher, ein gattungsgemäßes Haftetikett aufzuzeigen, dessen Codierung eine höhere Betriebssicherheit bietet.

Nach einer ersten Variante der Erfindung gemäß Anspruch 1 wird die Codierungsgrenze durch einen Rand einer ein Trägermaterial des Haftetiketts durchdringenden Aussparung festgelegt. Hierbei wird nur die nichtleitende Teilfläche durch das Haftetikett gebildet, während die leitende Teilfläche durch die zu etikettierende Filmpatrone gebildet ist, insbesondere im Fall einer aus Blech gefertigten Filmpatrone. Die gemeinsame Grenze zwischen den leitenden und nichtleitenden Teilflächen, welche durch ihre Lage die Codierung bildet, ergibt sich aus der Lage des Rands der Aussparung, während die unetikettierte Filmpatrone selbst eine durchgehend leitfähige Oberfläche haben kann und somit universell für verschiedene Filmtypen verwendbar ist.

Das Haftetikett kann eine elektrisch nicht leitende Außenfläche aufweisen, wobei eine einer elektrisch leitfähigen Teilfläche entsprechende Fläche des Haftetiketts eine elektrisch leitende Beschichtung trägt. Bei dieser Variante sind die leitenden und nicht leitenden Teilflächen und deren gemeinsame Grenze von dem Haftetikett gebildet, so daß es auf eine eventuelle Leitfähigkeit des Filmpatronenmaterials nicht mehr ankommt.

Die elektrisch leitende Beschichtung kann aufgedruckt sein oder aus elektrisch leitfähiger Prägefolie, insbesondere Heißprägefolie, aufgebracht sein.

Trägt das Haftetikett wenigstens zwei voneinander getrennte leitfähige Teilflächen, die durch einen Steg aus elektrisch leitfähigem Material miteinander verbunden sind, wird bevorzugt dieser Steg anschließend isolierend abgedeckt, damit die wenigstens zwei elektrisch leitfähigen Teilflächen nicht als eine durchgehende Fläche erkannt werden. Die isolierende Abdeckung des Stegs läßt sich durch einfaches Aufdrucken einer nichtleitenden Farbe erreichen oder durch eine nicht leitende Kaschierfolie, die nur im Bereich der leitfähigen Teilflächen ausgespart ist und den Steg isolierend abdeckt. Die Stege können so verlaufen, daß die Stege Kontakte der Kamera nicht berühren können und somit die Scheuerfestigkeit der nicht leitenden Farbe nur noch geringe Bedeutung hat.

Alternativ kann das Haftetikett, insbesondere dessen Trägermaterial, eine elektrisch leitfähige Außenfläche aufweisen, wobei eine einer elektrisch nicht leitfähigen Teilfläche entsprechende Fläche des Haftetiketts eine elektrisch nicht leitfähige Beschichtung trägt. Bevorzugt besteht das Trägermaterial des Haftetiketts selbst aus elektrisch leitfähigem Material, insbesondere aluminiumkaschiertem Papier oder Kunststoff einer Dicke bis 70 µm. Bevorzugt ist dann die nicht leitfähige Beschichtung aufgedruckt oder durch eine Kaschierfolie aus nicht leitfähigem Material gebildet, die im Bereich der leitfähigen Teilflächen Aussparungen aufweist.

Nach einer zweiten Variante der Erfindung gemäß Anspruch 6 ist die elektrisch nicht leitfähige Schicht des Haftetiketts von einer im Bereich der leitfähigen Teilfläche ausgesparten, nicht leitfähigen Laminier- oder Kaschierfolie verdeckt.

Bevorzugt ist die leitfähige Schicht von einer weiteren leitfähigen, insbesondere oxidationshemmenden Schutzschicht bedeckt. Die Schutzschicht ist bevorzugt derart ausgebildet, daß sie die Oxidation der darunter liegenden leitfähigen Schicht hemmt und selbst entweder nicht oxidiert oder dessen Oxid die Leitfähigkeit nicht oder nur minimal beeinträchtigt. Durch diese Maßnahme läßt sich zuverlässig eine etwaige Oxidation der elektrisch leitfähigen Schicht verhindern und hierdurch die Abtastsicherheit der Codierung erhöhen. Darüber hinaus werden durch Oxidation bedingte Verfärbungen der Metallschicht, etwa Grünspan bei einer kupferhaltigen Metallschicht, vermieden. Es werden daher Schutzschichten verwendet, die eine Oxidation der darunter liegenden leitfähigen Schicht hemmen, und selbst entweder nicht oxidieren oder deren Oxid die Leitfähigkeit bzw. Optik nicht oder nur minimal beeinträchtigen.

Die Schutzschicht kann als metallische Schicht auf die leitfähige Schicht aufgedampft sein oder aufgesputtert, plattiert, aufgalvanisiert oder in anderer Weise elektrochemisch aufgebracht sein. Die Metallbedampfung kann aus Aluminium oder Chrom bestehen. Die aufgesputterte Beschichtung kann aus Gold, Silber, Chrom, Nirostastahl, Titan oder Indiumzinnoxidlegierung bestehen.

Diese Schichten können sehr dünn aufgetragen werden und sind - gegenüber eines denkbaren Einsatzes als leitfähige Basisschicht - hinsichtlich der Kosten vertretbar. Durch die darunter liegende leitfähige Basisschicht bleibt darüber hinaus die Sicherheit gegen mechanische Beanspruchung bestehen.

Aufgedampftes oder gesputtertes Aluminium hat gegenüber gewalztem Aluminium eine andere Kristallstruktur und baut eine wesentlich dünnere Oxidschicht auf, die die Leitfähigkeit nur minimal beeinträchtigt.

Alternativ kann die Schutzschicht in Form einer lösungsmittelhaltigen Farbe bzw. eines solchen Lacks auf die leitfähige Schicht aufgebracht, insbesondere aufgedruckt sein. Als lösungsmittelhaltige Farbe ist geeignet eine solche mit Silberpigmenten, Graphitpigmenten, Nickelpigmenten und/oder Kupferpigmenten als leitfähigen Bestandteilen. Anstelle eines lösungsmittelhaltigen Lacks, der durch Ausdunstung auftrocknet, ist auch ein strahlenhärtender, insbesondere UV-strahlenhärtender Lack bzw. eine solche Farbe geeignet.

Darüber hinaus kann die Schutzschicht mittels Plattierung, Galvanisierung oder elektrochemisch aufgebracht werden.

Die elektrisch leitfähige Schicht kann auf einem nichtleitenden Trägermaterial aufliegen und mit diesem einen Verbund bilden, insbesondere einer weichen oder harten Aluminiumfolie einer Dicke von 8 bis 30 µm mit einer biaxial orientierten Polypropylen- bzw. Polyesterfolie einer Dicke von 12 bis 60 µm. In diesem Verbund kann das elektrisch leitfähige Material auch aus weicher oder harter Kupferfolie oder weicher oder harter Folie aus einer Legierung von Kupfer und Zink, Nickel, Eisen und/oder Beryllium einer Dicke von 8 bis 30 µm und einer biaxial orientierten Polypropylen- bzw. Polyesterfolie einer Dicke von 12 bis 60 µm bestehen.

Solche Verbundmaterialien ergeben eine zuverlässig abtastbare und haltbare Codierung bei stabilem Trägermaterial, so daß bei der serienmäßigen Verwendung bei der Massenfertigung von Filmpatronen keine Verformungsgefahr der Etiketten besteht und bei Verwendung die Codierung zuverlässig abtastbar ist.

Das elektrisch leitfähige Material kann aus einer weichen oder harten Aluminiumfolie einer Dicke von 15 bis 80 µm bestehen. Alternativ kann das elektrisch leitfähige Material auch aus weicher oder harter Kupferfolie oder weicher oder harter Folie aus einer Legierung von Kupfer und Zink, Nickel, Eisen und/oder Beryllium einer Dicke von 15 bis 80 µm bestehen.

Das Trägermaterial des Haftetiketts kann auch aus Papier oder Kunststoffolie gebildet werden. Im Fall der Kunststoffolie ist eine Dicke von 25 bis 120 µm bevorzugt, bei biaxial orientierter Polyesterfolie eine Dicke von 35 bis 70 µm. Im Fall eines Verbunds kann das Trägermaterial aus mindestens zwei Schichten aus Papier und Kunststoffolie oder zwei Kunststoffolien einer Gesamtdicke von 20 bis 120 µm bestehen, insbesondere aus zwei Folien aus biaxial orientiertem Polyester einer Gesamtdicke von 35 bis 70 µm. Das Trägermaterial aus Papier hat bevorzugt eine flächenbezogene Masse von 40 bis 150 g/m², insbesondere 60 bis 80 g/m².

Eine kostengünstige Alternative für das Trägermaterial ist eine biaxial gereckte, mit Vakuolen versehene Polypropylenfolie einer Dicke von 35 bis 60 µm.

Zum Schutz vor Beschädigungen ist bevorzugt die elektrisch nicht leitfähige Schicht wenigstens teilweise von einer im Bereich der von der nicht leitfähigen Schicht freien leitfähigen Schicht ausgesparten, nicht leitfähigen Kaschier- oder Laminierfolie verdeckt. Eine Kaschierung bzw. Laminierung, idealerweise mit biaxial orientierter Polypropylenfolie, eröffnet den Vorteil, daß ein sehr dünnes Basismaterial, vorzugsweise geschäumte Polypropylenfolie mit einer Dicke von 35 bis 50 µm eingesetzt werden kann und ein Teil der Verformungsarbeit durch die flexible Verbindung zwischen den Folie aufgenommen wird. Im Fall einer geschäumten oder mit Vakuolen versehenen Polypropylenfolie o.g. Dicke als Trägermaterial gewährleistet die Kaschierung die für die Verarbeitung erforderliche Biegesteifigkeit. Diese Ausführung ist besonders preisgünstig.

Die Etikettierung erfolgt vorzugsweise unmittelbar vor dem Abtrennen der Einzelzuschnitte von einem Blechstreifen und der Hülsenformung in der Montageeinheit, das heißt auf den noch flachliegenden Blechstreifen. Dadurch kann das Etikett so gestaltet werden, daß der obere und untere Etikettenrand unter den Deckel- und Bodenbördelungen verschwindet und so das Etikett als solches auf Anhieb nicht erkennbar ist.

Dies setzt voraus, daß das Etikettenmaterial die bei den folgenden Verarbeitungsschritten geleistete Verformungsarbeit ohne Beeinträchtigung aufnehmen kann. Bei der Formung kann es durch die im Etikettenmaterial auftretende Zugspannung zur Rückorientierung oder zum Bruch des Etikettenmaterials kommen. Die auftretenden Kräfte können sich auch in Randabhebungen der Etiketten und Distorsionen im Etikettenmaterial oder Druckbild auswirken.

Es werden deshalb Etikettenmaterialien und Druckfarben eingesetzt, die ausreichend flexibel sind, um die Verformungsarbeit ohne Zerstörungen aufzunehmen und gleichzeitig einen geringen Anteil an reversibler Verformung aufweisen. Die Voraussetzungen erfüllen möglichst dünne flexibel kaschierte Verbunde aus biaxial orientierten Polyesterfolien, sowie aluminiumkaschiertes Papier. Hinsichtlich der Druckfarben sind flexibel bleibende Systeme, wie Tiefdruck und konventioneller Siebdruck, zu bevorzugen.

Alternativ besteht auch die Möglichkeit, die fertige Patrone zu etikettieren, wobei das Etikett dann nicht unter den Bördelungen von Deckel und Boden verschwindet und somit optisch als Etikett sichtbar bleibt. Die Verformungsbeanspruchung ist bei diesem Verfahren dagegen auf ein Minimum reduziert.

Die Applikation der Etiketten erfolgt idealerweise automatisch von der Rolle - ausgerüstet mit einem Haftklebstoff und angeordnet auf einem Trägerband. Diese Form der Aufbringung erlaubt hohe Maschinengeschwindigkeiten bei gleichzeitig engen Toleranzen hinsichtlich der Positionierung.

Selbstverständlich kann diese Entwicklung auch bei anderen, gleich oder ähnlich aufgebauten Code-Systemen Verwendung finden, deren Codierungsflächen unterschiedliche physikalische Eigenschaften haben, z.B. Farben, Dicken oder dgl. Die Erfindung ist auch bei anderen Objekten als Filmpatronen anwendbar.

Es können eine Vielzahl von erfindungsgemäßen Haftetiketten auf einem gemeinsamen Trägerband angeordnet sein, zur automatischen Applikation durch einen Haftetikettenspender.

Zur Herstellung einer mit einem erfindungsgemäßen Etikett versehenen Filmpatrone kann man auf einen sich in seiner Längsrichtung bewegten Blechstreifen ein Band aus Etikettenmaterial aufbringen und dann den Blechstreifen gemeinsam mit dem darauf haftenden Etikettenband in einzelne Zuschnitte zur Bildung jeweils einer Filmpatronenhülse trennen.

Alternativ kann man auf einen sich in seine Längsrichtung bewegten Blechstreifen eine Vielzahl separater Etiketten hintereinander aufbringen und dann den Blechstreifen zwischen den auf ihm haftenden Etiketten in einzelne Zuschnitte zur Bildung jeweils einer Filmpatronenhülse trennen.

Zur Etikettierung fertiger Patronen werden die auf einem gemeinsamen Trägerband haftenden separaten Etiketten an den oberen Teil der Filmaustrittsöffnung angesetzt und dann der nachlaufende Etikettenteil durch Drehung der Patrone und eine dagegen drückende Rolle auf diese aufgerollt.

Dies ermöglicht die Verarbeitung des Blechs als Endlosstreifen, die sehr viel leichter zu handhaben sind als die bisher verwendeten großen Blechtafeln.

Bevorzugte Herstellungsverfahren für Haftetiketten der eingangs genannten Art sind in den Ansprüchen 30 bis 36 angegeben.

Die Erfindung wird nachfolgend anhand mehrerer Ausführungsbeispiele unter Hinweis auf die beigefügten Zeichnungen beschrieben.
Fig. 1 zeigt eine erste Ausführung des Haftetiketts auf einem Zuschnitt für einen Filmpatronenmantel;
Fig. 1a zeigt einen schematischen Schnitt durch das Haftetikett der ersten Ausführung;
Fig. 2 zeigt eine zweite Ausführung des Haftetiketts auf einem Trägerband;
Fig. 2a zeigt einen schematischen Schnitt durch das Haftetikett der zweiten Ausführung;
Fig. 3 zeigt eine dritte Ausführung des Haftetiketts auf einem Trägerband;
Fig. 3a zeigt einen schematischen Schnitt durch das Haftetikett der dritten Ausführung;
Fig. 4 zeigt eine Anordnung zum Aufbringen eines durchgehenden Etikettenbands auf einem Blechstreifen zur Herstellung von Filmpatronenhülsen;
Fig. 5 zeigt eine andere Anordnung zum Überführen von auf einem gemeinsamen Trägerband haftenden Einzeletiketten auf einen Blechstreifen zur Herstellung von Filmpatronenhülsen;
Fig. 6 zeigt einen schematischen Schnitt durch ein Haftetikett einer vierten Ausführung.
Fig. 7 zeigt einen schematischen Schnitt durch ein Haftetikett einer fünften Ausführung;
Fig. 8 zeigt eine Anordnung zum Übertragen eines Haftetiketts auf eine Filmpatronenhülse; und
Fig. 9 zeigt eine weitere Anordnung zum Übertragen eines Haftetiketts auf eine Filmpatronenhülse.

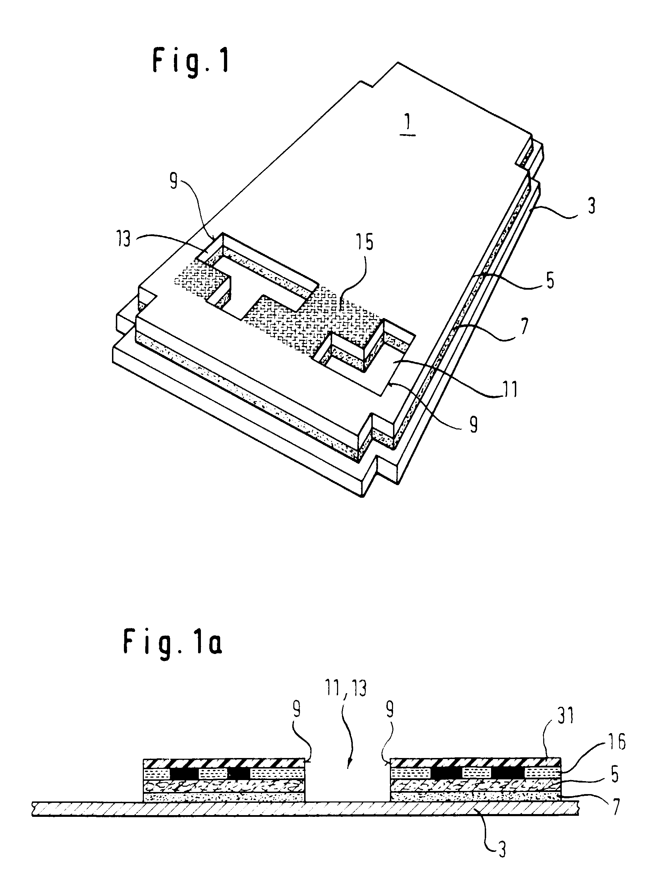

Bei der in Fig. 1 gezeigten Ausführung ist eine sogenannte CAS-Codierung, welche Informationen über den in der später gebildeten Filmpatrone enthaltenen fotografischen Film - Filmempfindlichkeit, Filmlänge und Belichtungsspielraum - enthält, in ein Haftetikett integriert, welches ein elektrisch nicht leitendes Etikettenmaterial verwendet. Die elektrische Leitfähigkeit des aus Blech bestehenden Hülsenmaterials wird dadurch genutzt, daß man an den Stellen, an denen elektrisch leitende Felder sein sollen, das Etikettenmaterial ausschneidet und entfernt.

Fig. 1 und 1a zeigen ein solches Haftetikett 1, welches auf einem Substrat 3, nämlich einem Stahlblechzuschnitt haftet, aus dem später eine Filmpatronenhülse gefertigt wird. Das Haftetikett 1 umfaßt eine elektrisch nicht leitende Trägerschicht 5, welche auf ihrer Unterseite mit einem Haftkleber 7 versehen ist. Die Trägerschicht 5 trägt einen Aufdruck 16, der wiederum von einer nicht leitenden Kaschier- oder Laminierfolie 31 geschützt sein kann. Entlang durch ihre Lage und Anordnung die CAS-Codierung bestimmender Grenzen 9 sind zwei Teilflächen 11, 13 aus dem Etikett 1 und die Kaschier- oder Laminierfolie 31 ausgestanzt. Zwischen den beiden ausgestanzten Teilflächen 11, 13 befindet sich eine nicht leitende Teilfläche 15. Nach dem Aufkleben dieses Trägeretiketts auf das Stahlblechsubstrat 3 erhält man die Codierung, gebildet aus den elektrisch leitfähigen Teilflächen 11, 13, die durch das Stahlblechmaterial miteinander elektrisch verbunden sind, und den elektrisch nicht leitenden Teilflächen 15 des Haftetiketts. Die Codierung ist durch eine Vielzahl elektrischer Kontakte einer Fotokamera, in die die Filmpatrone eingelegt ist, abtastbar. Die elektrischen Kontakte stehen je nach Lage der Grenze 9 mit den elektrisch leitfähigen Teilflächen 11, 13 oder der nicht leitenden Teilfläche 15 in Kontakt, so daß über die elektrischen Kontakte und das Substrat 3, welches die elektrisch leitfähigen Teilflächen 11, 13 miteinander elektrisch leitfähig verbindet, elektrischer Strom fließen kann, während durch den Isoliereffekt des Etikettenträgermaterials 5 im Bereich der nicht leitenden Teilfläche 15 kein elektrischer Strom fließen kann. Die Kamera kann mit ihren Kontakten anhand der Lage der den Teilflächen unterschiedlicher elektrischer Leitfähigkeit gemeinsamen Grenze die Filmempfindlichkeit, Filmlänge und den Belichtungsspielraum des in der Patrone enthaltenen Films automatisch erkennen.

Das Trägermaterial 5 besteht aus Papier mit einer flächenbezogenen Masse von 40 bis 150 g/m², insbesondere einer flächenbezogenen Masse von 60 bis 80 g/m².

Alternativ besteht das Trägermaterial 5 aus einer Kunststoffolie mit einer Dicke von 20 bis 120 µm, insbesondere einer biaxial orientierten Polypropylenfolie mit einer Dicke von 50 bis 70 µm.

Alternativ kann das Etikettenmaterial auch aus einer biaxial gereckten, geschäumten Polypropylenfolie einer Dicke zwischen 35 und 60 µm bestehen, welche zusätzlich mit der nicht leitenden Laminier- oder Kaschierfolie 31, insbesondere einer biaxial orientierten Polypropylenfolie, abgedeckt ist. Die Kaschierung verleiht dem Etikett die zur Verarbeitung erforderliche Biegesteifigkeit.

In einer zweiten Ausführung beruht die Integration der CAS--Codierung in das Haftetikett darauf, ein elek-trisch nicht leitendes Etikettenmaterial einzusetzen und die Codierung durch partielle Verdruckung von elektrisch leitfähigen Farben oder einer elektrisch leitfähigen Prägung und nicht leitfähigen Farben zu realisieren.

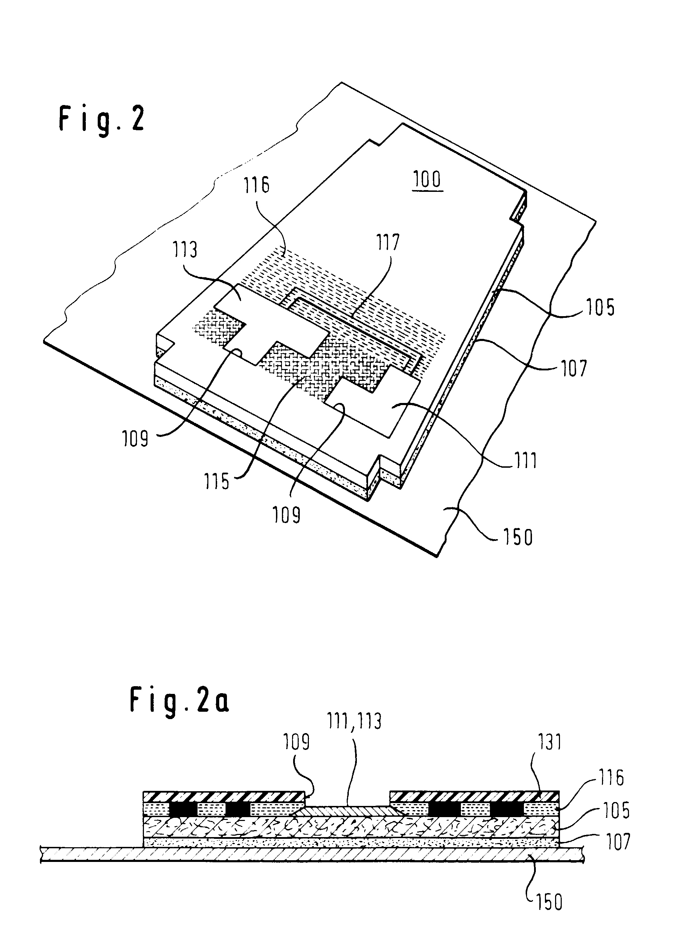

Fig. 2 und 2a zeigen ein solches Haftetikett 100, welches auf einem Trägerband 150 für automatische Applikation durch einen Haftetikettenspender haftet. Das Haftetikett 100 umfaßt eine elektrisch nicht leitende Trägerschicht 105, welche auf ihrer Unterseite mit einer Haftklebeschicht 107 versehen ist. Entlang durch ihre Lage und Anordnung die CAS-Codierung bestimmender Grenzen 109 sind zwei elek-trisch leitfähige Teilflächen 111, 113 voneinander abgegrenzt. Zwischen den beiden elektrisch leitfähigen Teilflächen 111, 113 befin-det sich eine nicht leitende Teilfläche 115. Die elek-trisch leitfähigen Teilflächen 111, 113 sind mit elektrisch leitfähiger Farbe auf das nicht leitende Trägermaterial 105 aufgedruckt oder sind mit elektrisch leitfähiger Prägefolie, insbesondere Heißprägefolie, aufgeprägt. Die durch die nicht leitende Teilfläche 115 geometrisch voneinander getrennten leitfähigen Teilflächen 111, 113 sind durch einen elektrisch leitfähigen Steg 117 miteinander verbunden, der in einem Arbeitsgang mit den leitfähigen Teilflächen 111, 113 auf das Trägermaterial aufgebracht wurde. Der Steg 117 ist durch eine elektrisch nicht leitende Druckfarbe und/oder Lack 116 isolierend abgedeckt. Die zwischen den leitfähigen Teilflächen 111, 113 befindliche nicht leitende Teilfläche 115 ist entweder unbedruckt oder mit elektrisch nicht leitenden Farben oder Lacken 116 bedruckt. Der Aufdruck 116 kann von einer im Bereich der leitfähigen Teilflächen 111, 113 ausgenommenen, etwa durchstanzten, nicht leitenden Kaschier- oder Laminierfolie 131 geschützt sein. Diejenigen Kontakte der Fotokamera, die die leitfähigen Teilflächen 111, 113 berühren, stehen innerhalb einer einzelnen leitfähigen Teilfläche miteinander sowie durch den Steg 117 mit der jeweils anderen leitfähigen Teilfläche in elektrischer Verbindung, während auf der elektrisch nicht leitenden Teilfläche 115 befindliche Kontakte von den anderen Kontakten isoliert sind, woraus die Kamera Informationen für den in der Patrone enthaltenen Film herausliest. Das Trägermaterial 105 besteht aus Papier mit einer flächenbezogenen Masse von 40 bis 150 g/m², insbesondere einer flächenbezogenen Masse von 50 bis 80 g/m².

Alternativ besteht das Trägermaterial 105 aus einer Kunststofffolie einer Dicke von 20 bis 120 µm, insbesondere aus einer biaxial orientierten Polypropylenfolie einer Dicke von 50 bis 70 µm.

Als Trägermaterial 105 verwendbar ist auch eine biaxial gereckte, geschäumte Polypropylenfolie einer Dicke zwischen 35 und 60 µm, die zusätzlich mit der nicht leitenden Laminier- oder Kaschierfolie 113, insbesondere einer biaxial orientierten Polypropylenfolie abgedeckt ist. Die Kaschierfolie 113 verleiht dem Etikett die zur Verarbeitung erforderliche Biegesteifigkeit.

Gemäß einer dritten Ausführung beruht die Integration er CAS-Codierung in das Haftetikett darauf, daß man elektrisch leitfähiges Trägermaterial verwendet und die elektrische Leitfähigkeit des Trägermaterials dahingehend nutzt, daß man an den Stellen, an denen die elektrisch leitfähigen Teilflächen sein sollen, das Trägermaterial nicht durch isolierende Lacke oder Farben bedruckt wird, während die restlichen Flächen des Etiketts mit elektrisch nicht leitender Farbe bzw. Lackierung bedruckt werden.

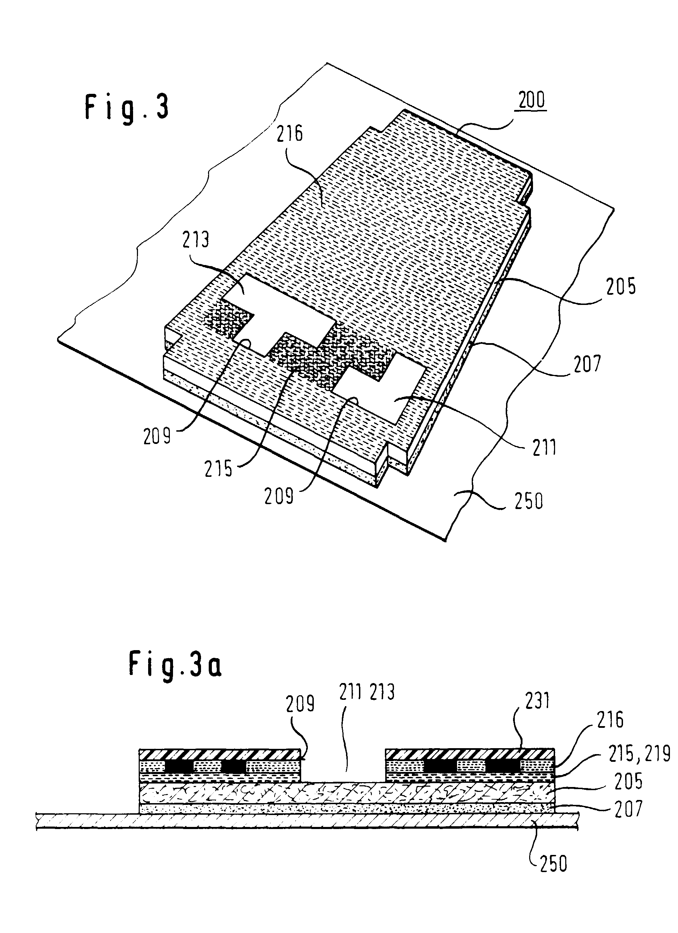

Fig. 3 und 3a zeigen ein solches Haftetikett 200, welches auf einem Trägerband 250 für automatische Applikation durch einen Haftetikettenspender haftet. Das Haftetikett 200 umfaßt eine elektrisch leitfähige Trägerschicht 205, welche auf ihrer Unterseite mit einem Haftkleber 207 versehen ist. Das Trägermaterial 205 ist auf seiner Außenfläche mit elektrisch nicht leitenden Lacken und/oder Druckfarben 216 abgedeckt, außer den elektrisch leitfähigen Teilflächen 211, 213, auf denen sich kein nicht leitender Lack 216 befindet. Bei dieser Ausführung ist die durch ihre Lage und Anordnung eine Codierung bestimmende Grenze 209 durch den Auftrag des elektrisch nicht leitenden Lacks 216 festgelegt. Zwischen den beiden leitfähigen Teilflächen 211, 213 befindet sich eine nicht leitende Teilfläche 215, welche ebenfalls aus elektrisch nicht leitendem Lack oder nicht leitender Druckfarbe gebildet ist. Die elektrischen Kontakte der Kamera stehen teilweise durch das Trägermaterial 205 miteinander in Kontakt oder sind je nach Lage der Grenzen 209 durch die elektrisch nicht leitende Lackschicht 219, 215 voneinander isoliert, woraus sich der Codierungseffekt ergibt.

Das bedruckte Etikett kann zusätzlich mit einer nicht leitenden Laminier- oder Kaschierfolie 231 abgedeckt sein, wobei die Laminier- bzw. Kaschierfolie 231 im Bereich der elektrisch leitenden Teilflächen 211, 213 ausgestanzt ist.

Als leitfähige Trägermaterialien 205 kommen in Betracht: Metallfolie, z.B. Kupferfolie blank, Aluminiumfolie blank, Kupferfolie oder Aluminiumfolie mit Zinn, Blei/Zinn- oder Nickelbeschichtung oder leitfähiger Schutzlackierung; Papier- oder Kunststoffolie, die mit einer der obigen Metallfolien vollflächig oder partiell kaschiert oder laminiert ist; Folie aus elektrisch leitfähigem Kunststoff; Verbund aus Papier- oder Kunststoffolie mit einer Folie aus elektrisch leitfähigem Kunststoff sowie metallisiertes Papier oder Kunststoffolie.

Das leitfähige Trägermaterial 205 besteht vorzugsweise aus aluminiumkaschiertem Papier bzw. Kunststoffolie einer maximalen Dicke von 70 µm.

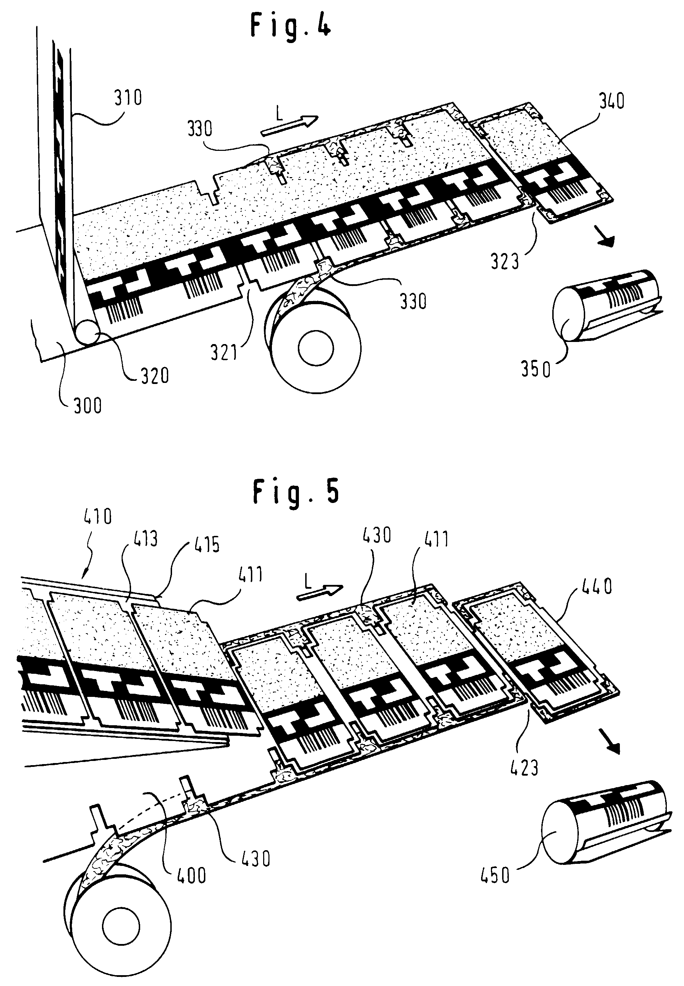

Fig. 4 zeigt schematisch eine Anordnung zur Etikettierung von Filmpatronen. Auf einem sich in seiner Längsrichtung L bewegten Endlosblechstreifen 300 wird ein Endlosband 310 aus Etikettenmaterial mittels einer Laminierrolle 320 aufgeklebt. Anschließend werden spätere Randbereiche zur Bildung einer Filmaustrittsöffnung der fertigen Filmpatrone bei 321 ausgestanzt. In einer nächsten Station werden entlang beider Längsränder der von dem Etikettenband 310 nicht beklebten Unterseite des Blechstreifens 300 Dichtfilzstreifen 330 aufgeklebt. Die Dichtfilze bilden später einen Licht- und Staubschutz der Filmaustrittsöffnung der fertigen Filmpatrone. Erst jetzt wird bei 323 der Blechstreifen 300 mitsamt dem auf ihm haftenden Etikettenband 310 und den Dichtfilzen 330 quer zur Laufrichtung L in eine Vielzahl von Zuschnitten 340 getrennt, um diese erst jetzt zu einer Filmpatronenhülse 350 zu formen.

Fig. 5 zeigt eine andere Anordnung der Filmpatronenetikettierung. Hier wird ein in seiner Längsrichtung L bewegter Stahlblechstreifen 400 mit Hilfe eines an sich bekannten automatischen Etikettenspenders 410 mit einer Vielzahl schon vorher voneinander getrennter Einzeletiketten 411 etikettiert. Wie bei der Ausführung nach Fig. 4 wird der Stahlblechstreifen 400 auf seiner nicht zu etikettierenden Seite entlang seiner Längsränder mit Dichtfilzstreifen 430 beklebt. Die von dem Etikettenspender 410 zugeführten Etiketten 411 befinden sich vor ihrer Übertragung auf den Blechstreifen 400 auf einem gemeinsamen Trägerband 413, das aus Papier, Polyesterfolie oder Polypropylenfolie gebildet ist, die gegen den Haftklenstoff des Etiketts abweisend ausgerüstet ist, beispielsweise mit einseitiger Silikonbeschichtung. Das Trägerband 413 wird um eine Spendekante 415 des Etikettenspenders 410 gezogen, wobei sich die Etiketten 411 von dem Trägerband 413 ablösen und auf diesen übertragen werden. Anschließend wird bei 423 der Blechstreifen 400 zwischen den mit Abstand aufgetragenen Etiketten 411 zusammen mit den Dichtfilzen 430 quer zur Laufrichtung L durchschnitten, so daß man eine Vielzahl von fertig etikettierten Blechabschnitten 440 erhält, die anschließend jeweils zu einer Filmpatronenhülse 450 geformt werden.

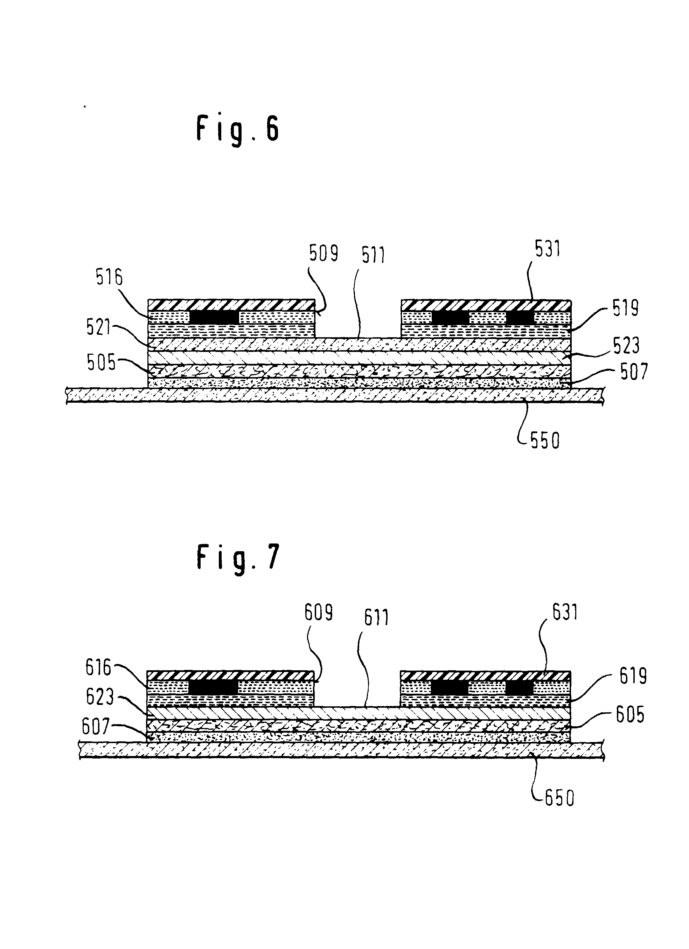

Fig. 6 zeigt im schematischen Schnitt eine vierte Ausführung des Haftetiketts. Eine Trägerschicht 505 aus nicht leitendem Material, etwa Kunststoffolie oder Papier, ist unterseitig mit Haftkleber 507 beschichtet und haftet auf einem silikonisierten Trägerband 550. Oberseitiq ist die Trägerschicht 505 mit einer leitfähigen Schicht 523 versehen und bildet mit der Trägerschicht 505 einen Verbund. Sie besteht aus elekrisch leitfähigem Kunststoff, Aluminiumfolie, Aluminiumrohfolie, kupferhaltiger Folie mit Zink, Nickel, Eisen und/oder berylliumlegierter Kupferfolie einer Dicke von 80 bis 30 µm. Fehlt die Trägerschicht 505, verwendet man eine etwas dickere leitfähige Schicht einer Dicke von 15 bis 80 µm.

Zum Schutz vor Oxidation, die eine reproduzierbare, sichere Abtastung der Codierung beeinträchtigt und sich u. U. verfärben würde, ist die leitfähige Schicht 523 von einer oxidationshemmenden Schicht 521 geschützt, in Form einer Metallbedampfung aus Aluminium oder einer aufgesputterten Beschichtung aus Gold, Silber, Nirostastahl, Titan oder Indiumzinnoxidlegierung. Möglich ist auch ein lösungsmittelhaltiger Lack oder ein strahlenhärtender, etwa UV-härtender Lack mit Silberpigmenten, Graphitpigmenten, Nickelpigmenten oder Kupferpigmenten als leitfähigen Bestandteilen.

Die leitfähige Schutzschicht 521 ist ähnlich der Ausführung von Fig. 3a von einer im Bereich der leitfähigen Teilfläche 511 ausgesparten Isolierschicht 519 verdeckt, die wiederum einen Aufdruck 516 trägt. Der Aufdruck 516 ist von einer im Bereich der leitfähigen Teilfläche 511 ausgesparten, nicht leitfähigen Kaschierfolie 531 geschützt. Die leitfähigen und nicht leitfähigen Teilflächen trennende Grenze, die die Codierung festlegt, ist mit 509 bezeichnet.

Fig. 7 zeigt im schematischen Schnitt eine fünfte Ausführung des Haftetiketts ähnlich Fig. 6, jedoch ohne Schutzschicht. Hier besteht die elektrisch leitfähige Schicht 623 aus Aluminium, Gold, Silber, Nirostastahl, Titan, Indiumzinnoxidlegierung oder Kupfer mit antikorrosiven Eigenschaften. Der Schichtaufbau und die verwendeten Materialien entsprechen der Ausführung von Fig. 6, wobei entsprechende Schichten mit um 100 erhöhten Bezugszahlen versehen sind.

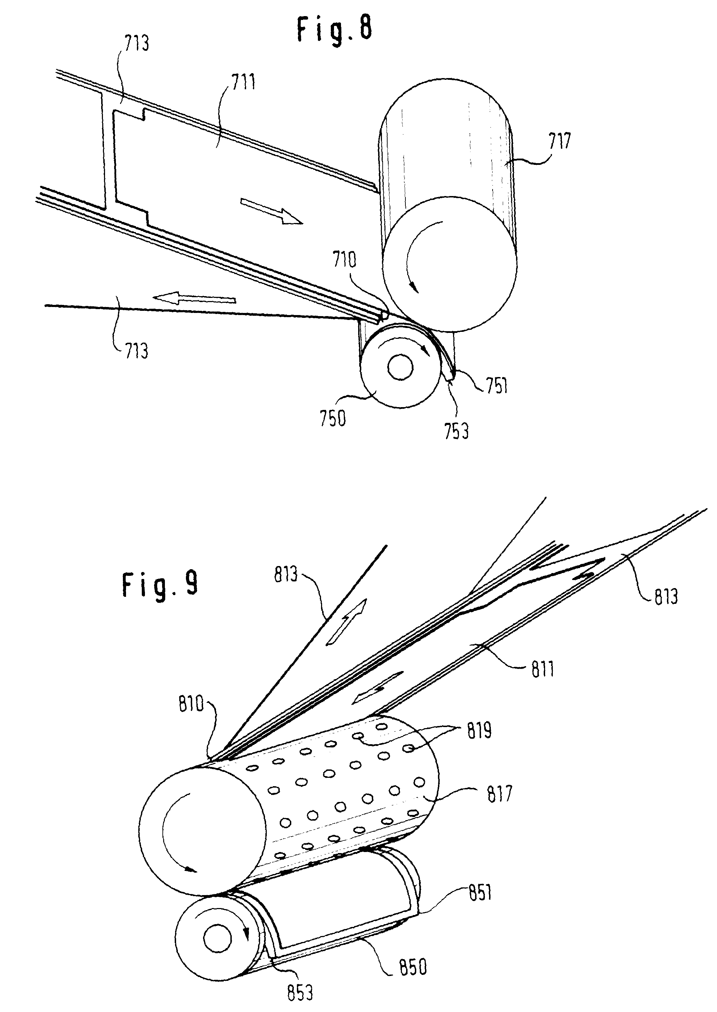

Fig. 8 zeigt eine Anordnung zur Übertragung von auf einem Trägerband 713 in Längsrichtung separat haftenden Haftetiketten 711 auf die Umfangsfläche einer Filmpatronenhülse 750. Las Trägerband 713 wird um eine feststehende Spendekante 710 herumgezogen, wobei sich das Haftetikett 711 von dem Trägerband 713 löst. Das Haftetikett 711 wird mit seinem Führungsende an einen radial vorstehenden Rand 751 der sich mit ihrer Filmaustrittsöffnung 753 voran drehenden Filmpatronenhülse 750 mittels einer Andruckrolle 717 angedrückt. Die Filmpatrone 750 befindet sich bezüglich des Haftetiketts 711 auf der gleichen Seite wie das Trägerband 713. Im Verlauf der Weiterdrehung wird das Haftetikett 711 auf den Umfang der Filmpatrone 750 übertragen.

Fig. 9 zeigt eine andere Möglichkeit der Übertragung eines auf einem Trägerband 813 in Längsrichtung separat haftenden Haftetiketts 811 auf die Umfangsfläche einer Filmpatronenhülse 850. Das Trägerband 813 wird um eine feststehende Spendekante 810 herumgezogen, wobei sich das Haftetikett 811 von dem Trägerband 813 löst und auf eine Saugtrommel 817 übertragen wird. Die Saugtrommel 817 enthält in ihrer Umfangsfläche an eine Unterdruckquelle angeschlossene Sauglöcher 819 und befindet sich auf der dem Trägerband 813 entgegengesetzten Seite des Haftetiketts 811. Von der sich drehenden Saugtrommel 817 wird das mit seiner Haftklebstoff tragenden Seite nach außen weisende Haftetikett 811 auf die Filmpatrone 850 übertragen. Das Haftetikett 811 wird mit seinem Führungsende zuerst an einen radial vorstehenden Rand 851 der sich mit ihrer Filmaustrittsöffnung 853 voran drehenden Filmpatronenhülse 850 angedrückt und im Verlauf der Weiterdrehung auf den Umfang der Filmpatronenhülse 850 übertragen.

## Patentansprüche

1. Haftetikett für einen zu etikettierenden Gegenstand, der auf seiner Außenseite durch die Lage wenigstens einer Grenze (9) zwischen einer elektrisch leitfähigen Teilfläche (11, 13) und einer elektrisch nicht leitfähigen Teilfläche (5, 15) des Haftetiketts (1) für Eigenschaften des Gegenstands maschinell lesbar zu codieren ist, **dadurch gekennzeichnet,** daß die Grenze (9) durch einen Rand (9) einer ein Trägermaterial (5) des Haftetiketts (1) durchdringenden Aussparung (11, 13) festgelegt ist.

2. Haftetikett nach Anspruch 1, **dadurch gekennzeichnet**, daß das Trägermaterial (5) des Haftetiketts eine elektrisch nicht leitfähige Außenfläche (15) aufweist und die Aussparung (11, 13) eine von dem zu etikettierenden Gegenstand (3) zu bildende, elektrisch leitfähige Teilfläche begrenzt.

3. Haftetikett nach Anspruch 1 oder 2, **dadurch gekennzeichnet,** daß die Aussparung (11, 13) ausgestanzt ist.

4. Haftetikett nach einem der Ansprüche 1 bis 3, **dadurch gekennzeichnet,** daß die Aussparung (11, 13) das Trägermaterial zusammen mit einer nicht leitfähigen Kaschier- oder Laminierfolie (31) auf dem Trägermaterial (5) vollständig durchdringt.

5. Haftetikett nach einem der Ansprüche 1 bis 4, **dadurch gekennzeichnet,** daß die Aussparung (11, 13) das Trägermaterial zusammen mit einer Haftkleberschicht (7) auf einer Unterseite des Trägermaterials (5) vollständig durchdringt.

6. Haftetikett für einen zu etikettierenden Gegenstand, der auf seiner Außenseite durch die Lage wenigstens einer Grenze (9; 109; 209; 509; 609) zwischen einer elektrisch leitfähigen Teilfläche (11, 13; 111, 113; 211, 213; 511; 611) des Haftetiketts und einer elektrisch nicht leitfähigen Schicht (5, 15; 105, 115; 215, 216; 519; 619) des Haftetiketts für Eigenschaften des Gegenstands maschinell lesbar zu codieren ist, **dadurch gekennzeichnet,** daß die elektrisch nicht leitfähige Schicht (5, 15; 105, 115; 215, 216; 519; 619) des Haftetiketts von einer im Bereich der leitfähigen Teilfläche (11, 13; 111, 113; 211, 213; 511; 611) ausgesparten, nicht leitfähigen Laminier- oder Kaschierfolie (31; 131; 231; 531; 631) verdeckt ist.

7. Haftetikett nach Anspruch 6, **dadurch gekennzeichnet,** daß die elektrisch leitfähige Teilfläche des Haftetiketts eine aufgedruckte oder aus elektrisch leitfähiger Prägefolie oder elektrisch leitfähiger Heißprägefolie aufgebrachte, elektrisch leitfähige Beschichtung (111, 113) trägt.

8. Haftetikett nach Anspruch 6 oder 7, **dadurch gekennzeichnet,** daß wenigstens zwei voneinander getrennte, leitfähige Teilflächen (111, 113) des Haftetiketts, deren Ränder im wesentlichen entlang der Grenzen (109) zwischen den leitfähigen Teilflächen und der nicht leitfähigen Schicht verlaufen, durch einen Steg (117) aus elektrisch leitfähigem Material miteinander verbunden sind.

9. Haftetikett nach einem der Ansprüche 1-8, **dadurch gekennzeichnet,** daß das Trägermaterial (5; 105; 505; 605) des Haftetiketts (1; 100; 500; 600) aus einem Verbund einer Papierschicht mit einer Kunststoffolie oder aus zwei Kunststoffolien gebildet ist, die zum Ausgleich von Verspannungen durch die Etikettierung auf einem gekrümmten Gegenstand flexibel miteinander verbunden sind.

10. Haftetikett nach einem der Ansprüche 1-8, **dadurch gekennzeichnet,** daß das Trägermaterial (5; 105; 505; 605) aus Papier einer flächenbezogenen Masse von 40 bis 150 g/m² besteht.

11. Haftetikett nach Anspruch 10, **dadurch gekennzeichnet,** daß das Trägermaterial (5; 105; 505; 605) aus biaxial orientierter Polypropylenfolie einer Dicke von 50 bis 70 µm, besteht.

12. Haftetikett nach einem der Ansprüche 1-8, **dadurch gekennzeichnet,** daß das Trägermaterial (5; 105; 505; 605) des Haftetiketts aus einer biaxial gereckten, Vakuolen aufweisenden Polypropylenfolie einer Dicke von 35 bis 60 µm besteht.

13. Haftetikett nach einem der Ansprüche 4 bis 8, **dadurch gekennzeichnet,** daß die Laminier- oder Kaschierfolie (31; 131; 231; 531; 631) durch eine biaxial orientierte Polypropylenfolie gebildet ist.

14. Haftetikett nach Anspruch 6, **dadurch gekennzeichnet,** daß ein Trägermaterial (205) des Haftetiketts (200) aus aluminiumkaschiertem Papier oder Kunststoff einer Dicke bis 70 µm besteht.

15. Haftetikett nach Anspruch 6 oder 14, **dadurch gekennzeichnet,** daß die elektrisch nicht leitfähige Schicht des Haftetiketts in Form einer elektrisch nicht leitfähigen Lackschicht (215, 216) auf einem Trägermaterial (205) des Haftetiketts aufliegt.

16. Haftetikett nach einem der Ansprüche 1 bis 15, **dadurch gekennzeichnet,** daß wenigstens eine der elektrisch leitfähigen Teilflächen bzw. Schichten von der elektrisch nicht leitfähigen Teilfläche bzw. Schicht in Draufsicht allseits umgeben ist.

17. Haftetikett nach einem der Ansprüche 1 bis 16, **dadurch gekennzeichnet,** daß es neben den elektrisch leitfähigen und nicht leitfähigen Teilflächen bzw. Schichten Flächenbereiche für vom Verwender lesbare Produktinformationen oder Strichcodes trägt.

18. Haftetikett nach Anspruch 6, **dadurch gekennzeichnet,** daß eine die elektrisch leitfähige Teilfläche bildende leitfähige Schicht (523) von einer weiteren leitfähigen Schutzschicht (521), die die Oxidation der darunter liegenden leitfähigen Schicht (523) hemmt und selbst entweder nicht oxidiert oder deren Oxid die Leitfähigkeit im wesentlichen nicht beeinträchtigt, bedeckt ist.

19. Haftetikett nach Anspruch 18, **dadurch gekennzeichnet,** daß die Schutzschicht (521) eine auf die leitfähige Schicht (523) aufgedampfte, aufgesputterte, plattierte, aufgalvanisierte oder elektrochemisch aufgebrachte metallische Schicht ist.

20. Haftetikett nach Anspruch 18, **dadurch gekennzeichnet,** daß die Schutzschicht (521) aus lösungsmittelhaltiger Farbe bzw. Lack auf die leitfähige Schicht (523) aufgedruckt ist.

21. Haftetikett nach Anspruch 18, **dadurch gekennzeichnet,** daß die Schutzschicht (521) aus strahlenhärtender, insbesondere UV-strahlenhärtender Farbe bzw. Lack auf die leitfähige Schicht (523) aufgedruckt ist.

22. Haftetikett nach einem der Ansprüche 18-21, **dadurch gekennzeichnet,** daß die elektrisch leitfähige Schicht (523) mit einem nicht leitenden Trägermaterial einen Verbund (523, 505) bildet.

23. Haftetikett nach einem der Ansprüche 18-22, **dadurch gekennzeichnet**, daß die elektrisch leitfähige Schicht (523; 623) aus Aluminiumfolie oder Aluminium-Rohfolie oder einer kupferhaltigen Folie hergestellt ist.

24. Haftetikett nach einem der Ansprüche 18-23, **dadurch gekennzeichnet,** daß die elektrisch leitfähige Schicht (523; 623) aus mit Zink, Nickel, Eisen und/oder Beryllium legierter Kupferfolie hergestellt ist.

25. Haftetikett nach Anspruch 23 oder 24, **dadurch gekennzeichnet,** daß die elektrisch leitfähige Schicht (523; 623) eine Dicke von 8 bis 30 µm bei auf nicht-leitendem Trägermaterial (505; 605) aufliegender Folie und 15 bis 80 µm bei einlagigem Material aufweist.

26. Haftetikett nach einem der Ansprüche 1-25, **dadurch gekennzeichnet,** daß eine die elektrisch leitfähige Teilfläche bildende elektrisch leitfähige Schicht (523; 623) auf das nicht-leitende Trägermaterial (505; 605) aufgedampft oder aufgesputtert ist.

27. Haftetikett nach Anspruch 26, **dadurch gekennzeichnet,** daß das Material der elektrisch leitfähigen Schicht (523; 623) gewählt ist aus Aluminium, Kupfer, mit Zink, Nickel, Eisen und/oder Beryllium legiertem Kupfer, Chrom, Gold, Silber, Nirostastahl, Titan und Indium-Zinn-Oxid.

28. Haftetikett nach Anspruch 6, **dadurch gekennzeichnet,** daß eine die elektrisch leitfähige Teilfläche bildende elektrisch leitfähige Schicht (523; 623) aus elektrisch leitfähigem Kunststoff gebildet ist.

29. Filmpatrone mit einem Haftetikett nach einem der Ansprüche 1 bis 28.

30. Verfahren zur Herstellung von Haftetiketten nach Anspruch 1, das aufeinanderfolgend die Schritte aufweist:
- Bilden der die Codierungsgrenze definierenden Aussparung (11, 13) durch Ausstanzen eines auf einem haftabweisenden Trägerband haftenden Bands aus Etikettenmaterial einschließlich einer Haftkleberschicht (7) des Etikettenmaterials im Bereich der Aussparung (11, 13),
- Abheben des ausgestanzten Bands aus Etikettenmaterial von dem Trägerband, wobei das der Aussparung (11, 13) entsprechende ausgestanzte Material an dem Trägerband haften bleibt,
- Auflegen des die Aussparungen (11, 13) aufweisenden Bands aus Etikettenmaterial auf ein neues haftabweisendes Trägerband,
- Ausstanzen eines Umfangsrands der zu bildenden Einzeletiketten (1),
- Abziehen von zwischen den Einzeletiketten (1) verbleibendem Matrixmaterial zur Freistellung der auf dem neuen Trägerband haftenden, die Aussparung (11, 13) enthaltenden Einzeletiketten (1).

31. Verfahren zur Herstellung von Haftetiketten nach Anspruch 1, das aufeinanderfolgend die Schritte aufweist:
- Aufbringen von Trennmittel auf bandförmiges Etikettenmaterial, das auf einem haftabweisenden Trägerband haftet, außer auf eine der Aussparung (11, 13) entsprechenden Fläche,
- Ausstanzen des Etikettenmaterials im Bereich der die Codierungsgrenze definierenden Aussparung (11, 13) einschließlich einer Haftkleberschicht (7) des Etikettenmaterials,
- Aufbringen einer Kaschierfolie auf das Etikettenmaterial, so daß die Kaschierfolie auf dem trennmittelfreien Bereich der Aussparung (11, 13) haftet, auf den Trennmittel tragenden, übrigen Flächen jedoch nicht haftet,
- Abziehen der Kaschierfolie mit dem an ihr haftenden ausgestanzten Material der Aussparung (11, 13) von dem Etikettenmaterial,
- Ausstanzen des Umfangsrandes der zu bildenden Einzeletiketten,
- Abziehen von zwischen den Einzeletiketten (1) verbleibendem Matrixmaterial zur Freistellung der auf dem Trägerband haftenden, die Aussparung (11, 13) enthaltenden Einzeletiketten (1).

32. Verfahren zur Herstellung von Haftetiketten nach Anspruch 1, das aufeinanderfolgend die Schritte aufweist:
- Aufbringen von Trennmittel auf bandförmiges Etikettenmaterial, das auf einem haftabweisenden Trägerband haftet, außer auf eine der die Codierungsgrenze definierenden Aussparung (11, 13) entsprechende Fläche und der zwischen den später auszustanzenden einzelnen Etiketten (1) verbleibenden Matrix aus Etikettenmaterial,
- Ausstanzen des Etikettenmaterials im Bereich der Aussparung (11, 13) und des Etikettenumfangs einschließlich einer Haftkleberschicht (7) des Etikettenmaterials,
- Aufbringen einer Kaschierfolie auf das Etikettenmaterial, so daß die Kaschierfolie auf dem trennmittelfreien Bereich der Aussparung und der zwischen den Einzeletiketten (1) verbleibenden Matrix haftet, auf den Trennmittel tragenden, übrigen Flächen jedoch nicht haftet,
- Abziehen der Kaschierfolie mit dem an ihr haftenden ausgestanzten Material der Aussparung (11, 13) und dem zwischen den Einzeletiketten (1) verbleibenden Matrixmaterial von dem Etikettenmaterial zur Freistellung der auf dem Trägerband haftenden, die Aussparung (11, 13) enthaltenden Einzeletiketten (1).

33. Verfahren zur Herstellung von Haftetiketten nach Anspruch 1, das aufeinanderfolgend die Schritte aufweist:
- Ausstanzen eines auf einem haftabweisenden Trägerband haftenden Bands aus Etikettenmaterial ein-schließlich einer Haftkleberschicht (7) des Etikettenmaterials und des Trägerbands im Bereich der die Codierungsgrenze definierenden Aussparung (11, 13),
- Entfernen des ausgestanzten Materials der Aussparung (11, 13) mittels des Stanzwerkzeugs oder Druckluft,
- Ausstanzen eines Umfangsrands der zu bildenden Einzeletiketten (1),
- Abziehen der zwischen den Einzeletiketten (1) verbleibenden Matrix aus Etikettenmaterial zur Freistellung der auf dem Trägerband haftenden, die Aussparung (11, 13) enthaltenden Einzeletiketten (1).

34. Verfahren zur Herstellung von Haftetiketten nach Anspruch 1, das aufeinanderfolgend die Schritte aufweist:
- Ausstanzen eines auf einem haftabweisenden Trägerband haftenden Bands aus Etikettenmaterial ein-schließlich einer Haftkleberschicht (7) des Etikettenmaterials im Bereich der die Codierungsgrenze definierenden Aussparung (11, 13),
- Führen des Bands aus Etikettenmaterial mit dem Trägerband um eine Kante, sodaß sich das ausgestanzte Material der Aussparung (11, 13) von dem Trägerband löst,
- Ausstanzen eines Umfangsrands der zu bildenden Einzeletiketten (1),
- Abziehen der zwischen den Einzeletiketten (1) verbleibenden Matrix aus Etikettenmaterial zur Freistellung der auf dem Trägerband (3) haftenden, die Aussparung (11, 13) enthaltenden Einzeletiketten (1).

35. Verfahren zur Herstellung von Haftetiketten nach Anspruch 6, das aufeinanderfolgend die Schritte aufweist:
- Ausstanzen der mittels einer Haftkleberschicht auf einem haftabweisenden Trägerband haftenden Laminier- oder Kaschierfolie (31; 131; 231; 531; 631) einschließlich der Haftkleberschicht der Kaschier- oder Laminierfolie im Bereich der späteren leitfähigen Teilfläche (11, 13; 111, 113; 211, 213; 511; 611) des Gegenstands oder des Haftetiketts, nicht jedoch des Trägerbands zur Bildung der Aussparung,
- Abziehen des Trägerbands mit dem zuvor ausgestanzten Material von der Laminier- oder Kaschierfolie (31; 131; 231; 531; 631),
- Aufbringen der im vorhergehenden Schritt gestanzten Laminier- oder Kaschierfolie (31; 131; 231; 531; 631) auf ein auf einem weiteren Trägerband (150) haftendes Band von Etikettenmaterial,
- Ausstanzen eines Umfangsrands der zu bildenden Einzeletiketten aus dem im vorherigen Schritt bereitgestellten Band von Etikettenmaterial,
- Abziehen der zwischen den im vorherigen Schritt ausgestanzten Einzeletiketten verbleibenden Matrix aus Etikettenmaterial zur Freistellung der auf dem Trägerband (150) haftenden, die ausgestanzte Laminier- oder Kaschierfolie (31; 131; 231; 531; 631) tragenden Einzeletiketten.

36. Verfahren zur Herstellung von Haftetiketten nach Anspruch 6, das aufeinanderfolgend die Schritte aufweist
- Ausstanzen der Laminier- oder Kaschierfolie (31; 131; 231; 531; 631) im Bereich der späteren leitfähigen Teilfläche (11, 13; 111, 113; 211, 213; 511; 611) des Gegenstands oder des Haftetiketts mit einem Stanzwerkzeug zur Bildung der Aussparung,
- Entfernen des zuvor ausgestanzten Materials von der Laminier- oder Kaschierfolie (31; 131; 231; 531; 631) durch das Stanzwerkzeug oder durch Druckluft,
- Aufbringen der im vorigen Schritt bereitgestellten, gestanzten Laminier- oder Kaschierfolie (31; 131; 231; 531; 631) auf ein auf einem weiteren Trägerband (150) haftendes Band von Etikettenmaterial,
- Ausstanzen eines Umfangsrands der zu bildenden Einzeletiketten aus dem im vorherigen Schritt bereitgestellten Band von Etikettenmaterial,
- Abziehen der zwischen den Einzeletiketten verbleibenden Matrix aus Etikettenmaterial zur Freistellung der auf dem Trägerband (150) haftenden, die ausgestanzte Laminier- oder Kaschierfolie (31; 131; 231; 531; 631) tragenden Einzeletiketten.

37. Filmpatrone mit einem nach einem der Ansprüche 30 bis 36 hergestellten Haftetikett.

38. Verwendung eines nach einem der Ansprüche 1 bis 28 ausgebildeten oder nach einem der Ansprüche 30 bis 36 hergestellten Haftetiketts zur Herstellung einer Filmpatrone durch folgende Schritte:
- Aufkleben eines Endlosbands (310) aus die Aussparung aufweisendem Etikettenmaterial auf die Oberseite eines in Längsrichtung (L) bewegten Endlosblechstreifens (300),
- Ausstanzen von Randbereichen (321) des Endlosblechstreifens (300) zur Bildung einer späteren Filmaustrittsöffnung der Filmpatrone,
- Aufkleben von Dichtfilzstreifen (330) auf die Unterseite der Randbereiche (321) des Endlosblechstreifens (300),
- Auftrennen des Endlosblechstreifens (300) einschließlich des Endlosbands (310) aus Etikettenmaterial in eine Vielzahl von die Haftetiketten tragenden Zuschnitten (340) und
- Formen von Filmpatronen (350) aus den die Haftetiketten tragenden Zuschnitten (340).

39. Verwendung eines nach einem der Ansprüche 1 bis 28 ausgebildeten oder nach einem der Ansprüche 30 bis 36 hergestellten Haftetiketts zur Herstellung einer Filmpatrone durch folgende Schritte:
- Ziehen eines Trägerbands (413) mit einer Vielzahl auf ihm separat haftender die Aussparung aufweisender Haftetiketten (411) um eine Spendekante (415), wobei sich die Haftetiketten (411) von dem Trägerband (413) lösen,
- Übertragen der abgelösten Haftetiketten (411) auf die Oberseite eines Endlosblechstreifens (400),
- Aufkleben von Dichtfilzstreifen (430) auf die Unterseite der Ränder des Endlosblechstreifens (400),
- Auftrennen des die Haftetiketten (411) tragenden Endlosblechstreifens (400) in eine Vielzahl von Zuschnitten (440) und
- Formen von Filmpatronen (450) aus den die Haftetiketten tragenden Zuschnitten (440).

40. Verwendung eines nach einem der Ansprüche 1 bis 28 ausgebildeten oder nach einem der Ansprüche 30 bis 36 hergestellten Haftetiketts zur Etikettierung einer Filmpatrone durch folgende Schritte:
- Ziehen eines Trägerbands (713) mit einer Vielzahl auf ihm separat haftender, die Aussparung aufweisender Haftetiketten (711) um eine Spendekante (710), wobei sich die Haftetiketten (711) von dem Trägerband (713) lösen,
- Andrücken jedes Haftetiketts (711) mit seinem Führungsende an einen radial vorstehenden, die Filmaustrittsöffnung (753) der Filmpatrone begrenzenden Rand (751) der sich mit ihrer Filmaustrittsöffnung (753) voran drehenden Filmpatrone (750),
- Übertragung des Haftetiketts (711) während Weiterdrehung der Filmpatrone (750) auf deren Umfangsfläche.

41. Verwendung eines nach einem der Ansprüche 1 bis 28 ausgebildeten oder nach einem der Ansprüche 30 bis 36 hergestellten Haftetiketts zur Etikettierung einer Filmpatrone durch folgende Schritte:
- Ziehen eines Trägerbands (813) mit einer Vielzahl auf ihm separat haftender, die Aussparung aufweisender Haftetiketten (811) um eine Spendekante (810), wobei sich die Haftetiketten (811) von dem Trägerband (813) lösen,
- Übertragen jedes gelösten Haftetiketts (811) auf die Umfangsfläche einer auf der vom Trägerband (813) abgelegenen Seite des Haftetiketts (811) angeordneten, sich drehenden Saugtrommel (817) mittels Unterdruck in der Saugtrommel (817),
- Übertragen des Haftetiketts (811) von der Saugtrommel (817) auf die Umfangsfläche einer sich drehenden Filmpatrone (850).

## Claims

1. Adhesive label for an article to be labelled, which is to be machine-readably-coded for properties of the article on its outside by a layer of at least one boundary (9) separating a conductive part surface (11, 13) and a non-conductive part surface (5, 15) of the adhesive label (1), characterised in that the boundary (9) is defined by an edge (9) of a cut-out (11, 13) penetrating the substrate (5) of the adhesive label (1).

2. Adhesive label according to claim 1, characterised in that the substrate (5) of the adhesive label has a non-conductive outer surface (15) and the cut-out (11, 13) delimits a conductive part surface to be formed by the article (3) to be labelled.

3. Adhesive label according to claim 1 or 2, characterised in that the cut-out (11, 13) is punched out.

4. Adhesive label according to one of claims 1 to 3, characterised in that the cut-out (11, 13) completely penetrates the substrate together with a non-conductive coating or laminating film (31) on the substrate (5).

5. Adhesive label according to one of claims 1 to 4, characterised in that the cut-out (11, 13) completely penetrates the substrate together with an adhesive layer (7) on the underside of the substrate (5).

6. Adhesive label for an article to be labelled, which is to be machine-readably coded to indicate properties of the article on the outside by positioning at least one boundary (9; 109; 209; 509; 609) separating a conductive part surface (11, 13; 111, 113; 211, 213; 511; 611) of the adhesive label and a non-conductive layer (5, 15; 105, 115; 215, 216; 519; 619) of the adhesive label, characterised in that the non-conductive layer (5, 15; 105, 115; 215, 216; 519; 619) of the adhesive label is covered by a non-conductive laminating or coating film (31; 131; 231; 531; 631) cut out in the region of the conductive part surface (11, 13; 111, 113; 211, 213; 511; 611).

7. Adhesive label according to claim 6, characterised in that the conductive part surface of the adhesive label has a conductive coating (111, 113) that is printed on or applied as a layer of conductive stamped film or conductive hot stamped film

8. Adhesive label according to claim 6 or 7, characterised in that at least two separated, conductive part surfaces (111, 113) of the adhesive label, the edges of which run essentially along the boundaries (109) between the conductive part surfaces and the non-conductive layer are connected together by a web (117) made of a conductive material.

9. Adhesive label according to one of claims 1-8, characterised in that the substrate (5; 105; 505; 605) of the adhesive label (1; 100; 500; 600) is a composite comprising a paper layer with a plastic film or two plastic films which are connected together flexibly to compensate distortions when labelling a curved article.

10. Adhesive label according to one of claims 1-8, characterised in that the substrate (5; 105; 505; 605) is made of paper with a mass per unit area of 40 to 150 g/m².

11. Adhesive label according to claim 10, characterised in that the substrate (5; 105; 505; 605) is made of a biaxially oriented polypropylene film with a thickness of 50 to 70 µm.

12. Adhesive label according to one of claims 1-8, characterised in that the substrate (5; 105; 505; 605) of the adhesive label is made of a biaxially stretched polypropylene film comprising vacuoles with a thickness of 35 to 60 µm

13. Adhesive label according to one of claims 4 to 8, characterised in that the laminating or coating film (31; 131; 231; 531; 631) is formed by a biaxially oriented polypropylene film.

14. Adhesive label according to claim 6, characterised in that a substrate (205) of the adhesive label (200) is made of aluminium-coated paper or plastic with a thickness of 70 µm.

15. Adhesive label according to claim 6 or 14, characterised in that the non-conductive layer of the adhesive label lies in the form of a non-conductive lacquer layer (215, 216) on a substrate (205) of the adhesive label.

16. Adhesive label according to one of claims 1 to 15, characterised in that at least one of the conductive part surfaces or layers is surrounded in plan view on all sides by the non-conductive part surface or layer.

17. Adhesive label according to one of claims 1 to 16, characterised in that in addition to the conductive and non-conductive part surfaces or layers it has surface areas for product information or bar bodes which can be read by the user.

18. Adhesive label according to claim 6, characterised in that a conductive layer (523) forming the conductive part surface is covered by an additional conductive protective layer (521), which inhibits the oxidation of the underlying conductive layer (523) and either does not oxidise itself or its oxide does not essentially impair conductivity.

19. Adhesive label according to claim 18, characterised in that the protective layer (521) is a metal layer vapour deposited, sputtered, plated, galvanised or electrochemically applied to the conductive layer (523).

20. Adhesive label according to claim 18, characterised in that the protective layer (521) made of solvent-containing ink or lacquer is printed onto the conductive layer (523).

21. Adhesive label according to claim 18, characterised in that the protective layer (521) made of radiation-curing, in particular UV radiation curing, ink or lacquer is printed onto the conductive layer (523).

22. Adhesive label according to one of claims 18-21, characterised in that the conductive layer (523) forms a composite (523, 505) with a non-conductive substrate.

23. Adhesive label according to one of claims 18-22, characterised in that the conductive layer (523; 623) is made from aluminium film or aluminium raw film or a copper-containing film.

24. Adhesive label according to one of claims 18-23, characterised in that the conductive layer (523; 623) is made of copper film alloyed with zinc, nickel, iron and/or beryllium.

25. Adhesive label according to claim 23 or 24, characterised in that the conductive layer (523; 623) has a thickness of 8 to 30 µm in the case of a film lying on a conductive substrate (505; 605) and a thickness of 15 to 80 pm in the case of single layered material.

26. Adhesive label according to one of claims 1-25, characterised in that a conductive layer (523; 623) forming the conductive part surface is vapour deposited or sputtered onto the non-conductive substrate (505; 605).

27. Adhesive label according to claim 26, characterised in that the material of the conductive layer (523; 623) is selected from aluminium, copper, copper alloyed with zinc, nickel, iron and/or beryllium, chromium, gold, silver, stainless steel, titanium and indium-tin oxide.

28. Adhesive label according to claim 6, characterised in that a conductive layer (523; 623) forming the conductive part surface is made of a conductive plastic.

29. Film cartridge with an adhesive label according to one of claims 1 to 28.

30. Method for producing adhesive labels according to claim 1 comprising the following consecutive steps:
- forming the cut-out (11, 13) defining the code boundary by stamping out a strip of label material adhering to an anti-adhesive backing strip including an adhesive layer (7) of label material in the region of the cut-out (11, 13),
- lifting the punched out strip of label material from the backing strip, whereby the punched material of the cut out (11, 13) remains stuck to the backing strip,
- placing the strip of label material with the cut-outs (11, 13) onto a new anti-adhesive backing strip,
- punching out a peripheral edge of the individual labels (1)
- removing matrix material remaining between the individual labels (1) to release the individual labels (1) containing the cut-out (11, 13) and adhering to the new backing strip.

31. Method for producing adhesive labels according to claim 1 comprising the following consecutive steps;
- applying separating means on strip-like label material which adheres to a anti-adhesive backing strip, apart from on the surface corresponding with the cut-out (11, 13),
- punching the label material in the region of the cut out (11, 13) defining the code boundary including an adhesive layer (7) of label material,
- applying a coating film onto the label material so that the coating film adheres to the separating means free region of the cut out (11, 13), to which other surfaces bearing separating means do not adhere,
- removing the coating film with the punched out material of the cut out (11, 13) adhering thereto from the label material,
- punching out a peripheral edge of the individual labels (1)
- removing matrix material remaining between the individual labels (1) to release individual labels (1) containing the cut-out (11, 13) and adhering to the backing strip.

32. Method for producing adhesive labels according to claim 1 comprising the following consecutive steps;
- applying separating means onto strip-like label material, which adheres to an anti-adhesive backing strip, apart from on a surface corresponding to the cut-out (11, 13) defining the code boundary, and the matrix made of label material remaining between the individual labels (1) to be punched at a later stage,
- punching out the label material in the region of the cut out (11, 13) and the label periphery including an adhesive layer (7) of the label material,
- applying a coating film onto the label material so that the coating film adheres to the separating means region of the cut out and the matrix remaining between the individual labels (1), but does not adheres to the other surfaces bearing the separating means,
- removing the coating film with the punched out material of the cut out (11, 13) adhering thereto and the matrix material remaining between the individual labels (1) from the label material for releasing the individual labels (1) containing the cut out (11, 13) and adhering to the backing strip.

33. Method for producing adhesive labels according to claim 1 comprising the following consecutive steps;
- punching out a strip of label material adhering to an anti-adhesive backing strip including an adhesive layer (7) of the label material and the backing strip in the region of the cut out (11, 13) defining the code boundary,
- removing the punched out material of the cut out (11, 13) by means of a punching tool or compressed air,
- punching out a peripheral edge of the individual labels (1),
- removing the matrix remaining between the individual labels (1) made of label material to release individual labels (1) containing the cut out (11,13) and adhering to the backing strip.

34. Method for producing adhesive labels according to claim 1 comprising the following consecutive steps;
- punching out a strip of label material adhering to an anti-adhesive backing strip including an adhesive layer (7) of label material in the region of the cut out (11, 13) defining the code boundary,
- guiding the strip of label material with the backing strip around an edge so that the punched out material of the cut out (11, 13) becomes detached from the backing strip,
- punching out a peripheral edge of the individual labels (1),
- removing the matrix remaining between the individual labels (1) for releasing the individual labels (1) containing the cut out (11, 13) and adhering to the backing strip (3).

35. Method for producing adhesive labels according to claim 6 comprising the following consecutive steps;
- punching out the laminating or coating film (31; 131; 231; 531; 631) adhering to an anti-adhesive backing strip by means of an adhesive layer including the adhesive layer of the coating or laminating film in the region of the later conductive part surface (11, 13; 111, 113; 211, 213; 511; 611) of the article or the adhesive label, but not the backing strip forming the cut out,
- removing the backing strip with the previously punched out material from the laminating or coating film (31; 131; 231; 531; 631),
- applying the laminating or coating film (31; 131; 231; 531; 631) punched out in the preceding stage onto a strip of label material adhering to another backing strip (150),
- punching out a peripheral edge of the individual labels from the strip of label material provided in the previous step,
- removing the matrix of label material remaining between the individual labels punched out in the previous step to release the individual labels adhering to the backing strip (150) and bearing the punched out laminating or coating film (31; 131; 231; 531; 631).

36. Method for producing adhesive labels according to claim 6 comprising the following consecutive steps;
- punching out the laminating or coating film (31; 131; 231; 531; 631) in the region of the later conductive part surface (11, 13; 111, 113; 211, 213; 511; 611) of the article or the adhesive label with a punching tool to form the cut out,
- removing the previously punched material from the laminating or coating film (31; 131; 231; 531; 631) using a punching tool or by compressed air,
- applying the punched laminating or coating film (31; 131; 231; 531; 631) provided in the previous step onto a strip of label material adhering to a further backing strip (15),
- punching out a peripheral edge of the individual labels from the strip of label material provided in the previous step,
- removing the matrix of label material remaining between the individual labels to release the individual labels adhering to the backing strip (150) and bearing the punched out laminating or coating film (31; 131; 231; 531; 631).

37. Film cartridge with an adhesive label produced according to one of claims 30 to 36.

38. Use of an adhesive label designed according to one of claims 1 to 28 or produced according to one of claims 30 to 36 for producing a film cartridge by means of the following steps:
- adhering a continuous strip (310) of label material with the cut-out onto the upper side of an endless metal strip (300) moved in longitudinal direction (L),
- punching out edge sections (321) from the continuous metal strip (300) to form later an outlet opening for the film cartridge,
- adhering compact felt strips (330) onto the underside of the edge sections (321) of the continuous metal strip (300),
- cutting the continuous metal strip (300) including the continuous strip (310) of label material into sections (340) mounting the adhesive labels and
- making film cartridges (350) from the sections (340) mounting the adhesive labels.

39. Use of an adhesive label designed according to one of claims 1 to 28 or produced according to one of claims 30 to 36 for producing a film cartridge by means of the following steps:
- drawing a backing strip (413) with a plurality of adhesive labels (411) adhering separately thereto with cut-outs around a dispensing edge (415), whereby the adhesive labels (411) become detached from the backing strip (413),
- transferring the detached adhesive labels (411) onto the upper side of a continuous metal strip (400),
- adhering compact felt strips (430) on the underside of the edges of the continuous metal strip (400),
- cutting the continuous metal strip (400) mounting the adhesive labels (411) into sections (440) and
- making film cartridges (450) from the sections (440) mounting the adhesive labels.

40. Use of an adhesive label designed according to one of claims 1 to 28 or produced according to one of claims 30 to 36 for labelling a film cartridge by means of the following steps:
- drawing a backing strip (713) with a plurality of adhesive labels adhering separately thereto with cut-outs around a dispensing edge (710), whereby the adhesive labels (711) become detached from the backing strip (713),
- pressing each adhesive label (711) with its leading edge onto a radially projecting edge (751) of the advance rotating film cartridge (750) with its film outlet opening (753) which edge delimits the film outlet opening (753) of the film cartridge,
- transferring the adhesive label (711) upon further rotation of the film cartridge (750) onto the peripheral surface of the latter.

41. Use of an adhesive label designed according to one of claims 1 to 28 or produced according to one of claims 30 to 36 for labelling a film cartridge by means of the following steps:
- drawing a backing strip (813) with a plurality of adhesive labels (811) adhering separately thereto with cut outs around a dispensing edge (810), whereby the adhesive labels (811) become detached from the backing strip (813),
- transferring each detached adhesive label (811) onto the peripheral surface of a rotating suction drum (817) arranged on the side of the adhesive label (811) remote from the backing strip (813) by means of underpressure in the suction drum (817),
- transferring the adhesive label (811) from the suction drum (817) onto the peripheral surface of a rotating film cartridge (850).

## Revendications

1. Etiquette adhésive pour un objet à étiqueter, qui doit être codée avec des propriétés de l'objet, de manière lisible par une machine, sur sa face extérieure, par la position d'au moins une limite (9) entre une surface partielle (11, 13) électriquement conductrice et une surface partielle (5, 15) non électriquement conductrice de l'étiquette adhésive (1), caractérisée en ce que la limite (9) est définie par un bord (9) d'une découpe (11, 13) traversant un matériau de support (5) de l'étiquette adhésive (1).

2. Etiquette adhésive selon la revendication 1, caractérisée en ce que le matériau de support (5) de l'étiquette adhésive présente une surface extérieure (15) électriquement non conductrice et la découpe (11, 13) délimite une surface partielle électriquement conductrice à former par l'objet (3) à étiqueter.

3. Etiquette adhésive selon la revendication 1 ou 2, caractérisée en ce que la découpe (11, 13) est estampée.

4. Etiquette adhésive selon l'une des revendications 1 à 3, caractérisée en ce que la découpe (11, 13) traverse totalement le matériau de support (5) ainsi qu'une feuille de doublage ou une feuille pour lamifié (31), non conductrice pour le matériau de support (5).

5. Etiquette adhésive selon l'une des revendications 1 à 4, caractérisée en ce que la découpe (11, 13) traverse totalement le matériau de support ainsi qu'une couche d'adhésif (7) sur une face inférieure du matériau de support (5).

6. Etiquette adhésive pour un objet à étiqueter qui doit être codée de manière lisible par une machine, sur sa face extérieure, par la position d'au moins une limite (9 ; 109 ; 209 ; 509 ; 609) entre une surface partielle (11, 13 ; 111, 113; 211, 213; 511 ; 611) électriquement conductrice et une couche partielle (5, 15 ; 105, 115 ; 215, 216 ; 519 ; 619) électriquement non conductrice de l'étiquette adhésive (1), pour des propriétés de l'objet, caractérisée en ce que la couche (5, 15; 105, 115 ; 215, 216 ; 519 ; 619) électriquement non conductrice de l'étiquette adhésive est recouverte par une feuille pour lamifié ou feuille de doublage (31 ; 131 ; 231 ; 531 ; 631) non conductrice, découpée dans la zone de la surface partielle conductrice (11, 13 ; 111, 113 ; 211, 213 ; 511 ; 611).

7. Etiquette adhésive selon la revendication 6, caractérisée en ce que la surface partielle électriquement conductrice de l'étiquette adhésive porte un revêtement électriquement conducteur (111, 113) imprimé ou appliqué à partir d'une feuille à marquer électriquement conductrice ou d'une feuille d'estampage à chaud électriquement conductrice.

8. Etiquette adhésive selon la revendication 6 ou 7, caractérisée en ce qu'au moins deux surfaces partielles conductrices (111, 113) séparées l'une de l'autre de l'étiquette adhésive, dont les bords s'étendent sensiblement le long des limites (109) entre les surfaces partielles conductrices et la couche non conductrice, sont reliées entre elles par une barrette (117) en matière électriquement conductrice.

9. Etiquette adhésive selon l'une des revendications 1 à 8, caractérisée en ce que le matériau de support (5 ; 105 ; 505 ; 605) de l'étiquette adhésive (1 ; 100 ; 500 ; 600) est constitué d'un composite fait d'une couche de papier et d'une feuille plastique ou de deux feuilles plastiques, qui sont reliées entre elles de manière flexible pour compenser les déformations dues à l'étiquetage sur un objet courbé.

10. Etiquette adhésive selon l'une des revendications 1 à 8, caractérisée en ce que le matériau de support (5 ; 105 ; 505 ; 605) est constitué en un papier d'une masse par unité de surface de 40 à 150 g/m².

11. Etiquette adhésive selon la revendication 10, caractérisée en ce que le matériau de support (5 ; 105 ; 505 ; 605) est constitué d'une feuille de polypropylène orientée biaxialement d'une épaisseur de 50 à 70 µm.

12. Etiquette adhésive selon l'une des revendications 1 à 8, caractérisée en ce que le matériau de support (5 ; 105 ; 505 ; 605) de l'étiquette adhésive est constitué d'une feuille de polypropylène étirée biaxialement et présentant des vacuoles, d'une épaisseur de 35 à 60 µm.

13. Etiquette adhésive selon l'une des revendications 4 à 8, caractérisée en ce que la feuille pour lamifié ou feuille de doublage (31 ; 131 ; 231 ; 531 ; 631) est constituée par une feuille de polypropylène orientée biaxialement.

14. Etiquette adhésive selon la revendication 6, caractérisée en ce qu'un matériau de support (205) de l'étiquette adhésive (200) est constitué d'un papier doublé d'aluminium ou d'une matière plastique d'une épaisseur allant jusqu'à 70 µm.

15. Etiquette adhésive selon la revendication 6 ou 14, caractérisée en ce que la couche électriquement non conductrice de l'étiquette adhésive est appliquée, sous la forme d'une couche de laque (215 ; 216) électriquement non conductrice, sur un matériau de support (205) de l'étiquette adhésive.

16. Etiquette adhésive selon l'une des revendications 1 à 15, caractérisée en ce qu'au moins l'une des surfaces partielles ou couches électriquement conductrices est entourée de tous côtés par la surface partielle ou couche électriquement non conductrice, vue de dessus.

17. Etiquette adhésive selon l'une des revendications 1 à 16, caractérisée en ce qu'elle porte, outre les surfaces partielles ou couches électriquement conductrices et non conductrices, des zones de surface pour des informations concernant le produit lisible par l'utilisateur ou pour des codes barres.

18. Etiquette adhésive selon la revendication 6, caractérisée en ce qu'une couche conductrice (523), qui forme une surface partielle électriquement conductrice, est recouverte par une autre couche de protection conductrice (521), qui empêche l'oxydation de la couche conductrice (523) se trouvant au-dessous et qui elle-même soit ne s'oxyde pas, soit ne réduit pas sensiblement la conductibilité par son oxyde.

19. Etiquette adhésive selon la revendication 18, caractérisée en ce que la couche de protection (521) est une couche métallique appliquée par métallisation sous vide, pulvérisation, contrecollage, galvanisation ou de manière électrochimique.

20. Etiquette adhésive selon la revendication 18, caractérisée en ce que la couche de protection (521) faite d'une encre ou d'une laque contenant un solvant est imprimée sur la couche conductrice (523).

21. Etiquette adhésive selon la revendication 18, caractérisée en ce que la couche de protection (521) est constituée d'une encre ou d'une laque durcissant sous rayonnement notamment sous l'effet de rayonnements UV, est imprimée sur la couche conductrice (523).

22. Etiquette adhésive selon l'une des revendications 18 à 21, caractérisée en ce que la couche électriquement conductrice (523) forme un composite (523, 505) avec un matériau de support non conducteur.

23. Etiquette adhésive selon l'une des revendications 18 à 22, caractérisée en ce que la couche électriquement conductrice (523 ; 623) est réalisée à partir d'une feuille d'aluminium ou d'une feuille brute d'aluminium ou d'une feuille contenant du cuivre.

24. Etiquette adhésive selon l'une des revendications 18 à 23, caractérisée en ce que la couche électriquement conductrice (523 ; 623) est réalisée à partir d'une feuille de cuivre contenant du zinc, du nickel, du fer et/ou du béryllium.

25. Etiquette adhésive selon la revendication 23 ou 24, caractérisée en ce que la couche électriquement conductrice (523 ; 623) présente une épaisseur de 8 à 30 µm dans le cas d'une feuille placée sur un matériau de support non conducteur (505 ; 605) et une épaisseur de 15 à 80 µm dans le cas d'un matériau à une seule couche.

26. Etiquette adhésive selon l'une des revendications 1 à 25, caractérisée en ce qu'une couche électriquement conductrice (523 ; 623), qui forme la surface partielle électriquement conductrice, est métallisée sous vide ou pulvérisée sur le matériau de support non conducteur (505 ; 605).

27. Etiquette adhésive selon la revendication 26, caractérisée en ce que le matériau de la couche électriquement conductrice (523 ; 623) est choisi parmi les matériaux suivants: aluminium, cuivre, cuivre allié au zinc, nickel, fer et/ou béryllium, chrome, or, argent, acier inoxydable titane et oxyde d'indium et d'étain.

28. Etiquette adhésive selon la revendication 6, caractérisée en ce qu'une couche électriquement conductrice (523 ; 623), formant la surface partielle électriquement conductrice, est constituée en une matière plastique électriquement conductrice.

29. Bobine de pellicule présentant une étiquette adhésive selon l'une des revendications 1 à 28.

30. Procédé de fabrication d'étiquettes adhésives selon la revendication 1, qui présente successivement les étapes suivantes:
- former la découpe (11, 13) qui définit la limite de codage par découpe d'une bande d'un matériau pour étiquettes qui adhère sur une bande de support séparable, ainsi que d'une couche de colle adhésive (7) du matériau pour étiquettes dans la zone de la découpe (11, 13),
- séparer en la soulevant la bande découpée faite du matériau pour étiquettes de la bande de support, la matière découpée correspondant à la découpe (11, 13) adhérant encore à la bande de support,
- mettre en place la bande de matériau pour étiquettes, présentant les découpes (11, 13) sur une nouvelle bande de support séparable,
- découper d'un bord périphérique des étiquettes individuelles (1) à former,
- enlever la matière de la matrice qui reste entre les étiquettes individuelles (1) pour dégager les étiquettes individuelles (1) qui adhèrent sur la nouvelle bande de support et qui contiennent la découpe (11, 13).

31. Procédé de fabrication d'étiquettes adhésives selon la revendication 1 qui présente les étapes successives suivantes:
- appliquer un agent de séparation sur un matériau pour étiquettes en forme de bande, qui adhère sur une bande de support séparable, à l'exception d'une surface correspondant à la découpe (11, 13),
- découper le matériau pour étiquettes dans la zone de la découpe (11, 13) qui définit la limite de codage ainsi qu'une couche de colle adhésive (7) du matériau pour étiquettes,
- appliquer une feuille de doublage sur le matériau pour étiquettes, de manière que cette feuille adhère sur la zone sans agent de séparation de la découpe (11, 13) mais n'adhère pas sur les autres surfaces portant l'agent de séparation,
- enlever la feuille de doublage avec le matériau découpé adhérant à celle-ci de la découpe (11, 13) du matériau pour étiquettes,
- découper le bord périphérique des étiquettes individuelles à former,
- enlever le matériau de la matrice qui reste entre les étiquettes individuelles (1) pour dégager les étiquettes individuelles (1) qui adhèrent sur la nouvelle bande de support et qui contiennent la découpe (11, 13).

32. Procédé de fabrication d'étiquettes adhésives selon la revendication 1 qui présente les étapes successives suivantes:
- appliquer un agent de séparation sur un matériau pour étiquettes en forme de bande, qui adhère sur une bande de support séparable, à l'exception d'une surface correspondant à la découpe (11, 13) qui définit la limite de codage et de la matrice en matériau pour étiquettes qui reste entre les étiquettes (1) individuelles à découper ultérieurement,
- découper le matériau pour étiquettes dans la zone de la découpe (11, 13) et du pourtour des étiquettes ainsi que d'une couche de colle adhésive (7) du matériau pour étiquettes,
- appliquer une feuille de doublage sur le matériau pour étiquettes, de manière que celle-ci adhère à la zone sans agent de séparation de la découpe et à la matrice qui reste entre les étiquettes individuelles (1), mais n'adhère pas aux autres surfaces qui portent l'agent de séparation,
- retirer la feuille de doublage avec le matériau découpé qui adhère à celle-ci de la découpe (11, 13) et avec le matériau de la matrice qui reste entre les étiquettes individuelles (1) du matériau pour étiquettes, afin de dégager les étiquettes individuelles (1) qui adhèrent à la bande de support et qui contiennent la découpe (11, 13).

33. Procédé de fabrication d'étiquettes adhésives selon la revendication 1 qui présente les étapes successives suivantes:
- découper une bande de matériau pour étiquettes qui adhère à une bande de support séparable, ainsi qu'une couche de colle adhésive (7) du matériau pour étiquettes et de la bande de support dans la zone de la découpe (11, 13) qui définit la limite de codage,
- enlever la matière découpée de la découpe (11, 13) au moyen de l'outil de découpage ou d'air comprimé,
- découper un bord périphérique des étiquettes individuelles à former,
- retirer la matrice en matériau pour étiquettes qui reste entre les étiquettes individuelles (1), pour dégager les étiquettes individuelles (1) qui adhèrent à la bande de support et qui contiennent la découpe (11, 13).

34. Procédé de fabrication d'étiquettes adhésives selon la revendication 1 qui présente les étapes successives suivantes:
- découper une bande de matériau pour étiquettes qui adhère à une bande de support séparable, ainsi qu'une couche de colle adhésive (7) du matériau pour étiquettes dans la région de la découpe (11, 13) qui définit la limite de codage,
- guider la bande en matériau pour étiquettes avec la bande de support autour d'une arête, de manière que le matériau découpé de la découpe (11, 13) se sépare de la bande de support,
- découper un bord périphérique des étiquettes individuelles (1) à former,
- retirer la matrice en matériau pour étiquettes qui reste entre les étiquettes individuelles (1), pour dégager les étiquettes individuelles (1) qui adhèrent à la bande de support et qui contiennent la découpe (11, 13).

35. Procédé de fabrication d'étiquettes adhésives selon la revendication 6 qui présente les étapes successives suivantes:
- découper la feuille pour lamifié ou feuille de doublage (31 ; 131 ; 231 ; 531 ; 631) qui adhère au moyen d'une couche de colle adhésive à une bande de support séparable, ainsi que la couche de colle adhésive de la feuille de doublage ou feuille pour lamifié dans la région de la future surface partielle conductrice (11, 13; 11, 113; 211, 213; 511 ; 611) de l'objet ou de l'étiquette adhésive mais pas la bande de support, pour former la découpe,
- retirer la bande de support avec le matériau préalablement découpé de la feuille pour lamifié ou feuille de doublage (31; 131 ; 231 ; 531 ; 631),
- appliquer la feuille pour lamifié ou feuille de doublage (31; 131 ; 231 ; 531 ; 631), découpée au cours de l'étape précédente, sur une bande de matériau pour étiquettes qui adhère sur une autre bande de support (150),
- découper un bord périphérique des étiquettes individuelles à former dans la bande de matériau pour étiquettes, préparée au cours de l'étape précédente,
- retirer la matrice du matériau pour étiquettes qui reste entre les étiquettes individuelles découpées au cours de l'étape précédente afin de dégager les étiquettes individuelles qui adhèrent à la bande de support 150 et portent la feuille pour lamifié ou feuille de doublage (31; 131 ; 231 ; 531 ; 631) découpée.

36. Procédé de fabrication d'étiquettes adhésives selon la revendication 6 qui présente les étapes successives suivantes:
- découper la feuille pour lamifié ou feuille de doublage (31; 131 ; 231 ; 531 ; 631) dans la zone de la future surface partielle conductrice (11, 13; 11, 113; 211, 213 ; 511 ; 611) de l'objet ou de l'étiquette adhésive avec un outil de découpage pour former la découpe,
- enlever le matériau précédemment découpé de la feuille pour lamifié ou feuille de doublage (31 ; 131 ; 231 ; 531 ; 631) au moyen de l'outil de découpage ou d'air comprimé,
- appliquer la feuille pour lamifié ou feuille de doublage (31 ; 131 ; 231 ; 531 ; 631), découpée au cours de l'étape précédente, sur une bande de matériau pour étiquettes qui adhère sur une autre bande de support (150),
- découper un bord périphérique des étiquettes individuelles à former dans la bande de matériau pour étiquettes, préparée au cours de l'étape précédente,
- retirer la matrice de matériau pour étiquettes qui reste entre les étiquettes individuelles découpées au cours de l'étape précédente afin de dégager les étiquettes individuelles qui adhèrent à la bande de support 150 et portent la feuille pour lamifié ou feuille de doublage (31 ; 131 ; 231 ; 531 ; 631) découpée.

37. Bobine de pellicule présentant une étiquette adhésive réalisée selon l'une des revendications 30 à 36.

38. Utilisation d'une étiquette adhésive conformée selon l'une des revendications 1 à 28 ou réalisée selon l'une des revendications 30 à 36 pour la fabrication d'une bobine de pellicule, par les étapes suivantes:
- coller une bande sans fin d'un matériau pour étiquettes présentant la découpe sur la face supérieure d'une bande de tôle sans fin (300) déplacée dans la direction longitudinale (L),
- découper des zones de bordure (321) de la bande de tôle sans fin (300) pour former une future ouverture de sortie de pellicule de la bobine de pellicule,
- coller des bandes de feutre d'étanchéité (330) sur la face inférieure des zones de bordure (321) de la bande de tôle sans fin (300),
- sectionner la bande de tôle sans fin (300) y compris la bande sans fin (310) en matériau pour étiquettes en un grand nombre de coupes (340) portant les étiquettes adhésives et
- former des bobines de pellicule (350) à partir des coupes (340) qui portent les étiquettes adhésives.

39. Utilisation d'une étiquette adhésive conformée selon l'une des revendications 1 à 28 ou réalisée selon l'une des revendications 30 à 36 pour la fabrication d'une bobine de pellicule, par les étapes suivantes:
- tirer une bande de support (413) avec un grand nombre d'étiquettes adhésives (411) qui présentent la découpe et qui adhèrent séparément à cette bande de support, autour d'un bord de distribution (415), les étiquettes adhésives (411) se détachant de la bande de support (413),
- transférer les étiquettes adhésives (411) détachées à la face supérieure d'une bande de tôle (105, 400),
- coller des bandes de feutre d'étanchéité (430) sur la face inférieure des bords de la bande de tôle (105, 400),
- séparer la bande de tôle (105, 400) qui porte les étiquettes adhésives (411) en un grand nombre de coupes (440) et
- former des bobines de pellicule (450) à partir des coupes (440) qui portent les étiquettes adhésives.

40. Utilisation d'une étiquette adhésive conformée selon l'une des revendications 1 à 28 ou réalisée selon l'une des revendications 30 à 36 pour l'étiquetage d'une bobine de pellicule, par les étapes suivantes:
- tirer une bande de support (713) avec un grand nombre d'étiquettes adhésives (711) qui présentent la découpe et qui adhèrent séparément à cette bande de support, autour d'un bord de distribution (710), les étiquettes adhésives (711) se détachant de la bande de support (713),
- presser chaque étiquette adhésive (711) par son extrémité de guidage contre un bord (715) dépassant radialement et délimitant l'ouverture de sortie de pellicule (753) de la bobine de pellicule (750) qui tourne avec son ouverture de sortie de pellicule (753) à l'avant,
- transférer l'étiquette adhésive (711) pendant la poursuite de la rotation de la bobine de pellicule (750) sur sa surface périphérique.

41. Utilisation d'une étiquette adhésive conformée selon l'une des revendications 1 à 28 ou réalisée selon l'une des revendications 30 à 36 pour l'étiquetage d'une bobine de pellicule, par les étapes suivantes:
- tirer une bande de support (813) avec un grand nombre d'étiquettes adhésives (811) qui présentent la découpe et qui adhèrent séparément à cette bande de support, autour d'un bord de distribution (810), les étiquettes adhésives (811) se détachant de la bande de support (813),
- transférer chaque étiquette adhésive (811) détachée, sur la surface périphérique d'un tambour d'aspiration (817) tournant, disposé sur le côté de l'étiquette adhésive (811) tourné à l'opposé de la bande de support (813), au moyen d'une dépression dans le tambour d'aspiration (817),
- transférer l'étiquette adhésive (811) du tambour d'aspiration (817) à la surface périphérique d'une bobine de pellicule (850) tournante.
